# EUROPÄISCHE PATENTSCHRIFT

(11) **EP 1 150 105 B1**
(45) Veröffentlichungstag und Bekanntmachung des Hinweises auf die Patenterteilung: **07.04.2010**
(21) Anmeldenummer: 01109437.2
(22) Anmeldetag: 23.04.2001
(51) Int. Cl.: G01F 11/28, B01L 3/02, B01L 3/00

(54) **Gaspolster-Mikrodosiersystem**
Microdosing system with gas cushion
Système microdoseur à coussin de gaz

(30) Priorität: 28.04.2000 DE 10022398
(43) Veröffentlichungstag der Anmeldung: 31.10.2001
(73) Patentinhaber: EPPENDORF AG, 22339 Hamburg (DE)
(72) Erfinder: Sander, Dietmar, Dr., 20535 Hamburg (DE)
(74) Vertreter: Hauck Patent- und Rechtsanwälte

(56) Entgegenhaltungen:
- EP-A- 0 434 149
- EP-A- 0 865 824
- WO-A-99/10099
- US-A- 5 456 880

## Beschreibung

Die Erfindung bezieht sich auf ein Gaspolster-Mikrodosiersystem zum Dosieren kleinster Flüssigkeitsvolumina im Mikroliter- und Submikroliterbereich.

Bei den bekannten Dosiersystemen wird grob zwischen Pipetten, Dispensern und Multifunktionsdosierern unterschieden. Pipetten geben das aufgenommene Flüssigkeitsvolumen in einem Schritt wieder ab. Bei Dispensern erfolgt die Abgabe der aufgenommenen Flüssigkeitsmenge schrittweise. Multifunktionsdosierer erlauben beide Betriebsweisen. Sämtliche Systemtypen gibt es auch in Mehrkanalausführung, welche die gleichzeitige Durchführung mehrerer gleichartiger Dosierungen ermöglichen.

Herkömmliche Kolbenhubpipetten sind als feste oder einstellbare Pipetten ausgeführt und arbeiten in einem Volumenbereich von etwas weniger als 1 µl bis zu etwa 10 ml. Durch Verschieben eines Kolbens in einem Zylinder wird ein Gaspolster bewegt, um flüssige Probe in eine Pipettenspitze einzusaugen oder aus dieser auszustoßen. Dies hat den Vorteil, daß die Flüssigkeit nicht in Kontakt mit der Kolbenhubpipette kommt, sondern nur die Pipettenspitze kontaminiert. Diese ist deshalb zumeist als Einmalartikel ("Disposable") ausgeführt, insbesondere aus Kunststoff, und wird nach Gebrauch gegen eine saubere Pipettenspitze ausgetauscht.

Die Dosierung mittels Kolbenhubpipetten ist mit verschiedenen systembedingten Fehlern behaftet. Bei einstellbaren Kolbenhubpipetten entsteht ein Pipettierfehler dadurch, daß das Gewicht der Flüssigkeitssäule an dem Gaspolster "hängt" und dieses je nach eingestelltem Flüssigkeitsvolumen unterschiedlich dehnt. Insbesondere bei kleineren Dosiermengen wird die Dosiergenauigkeit erheblich durch die Benetzung der Pipettenspitze von der zu dosierenden Flüssigkeit beeinträchtigt. Kolbenhubpipetten sind überdies bei kleinen Dosiermengen nicht oder nur eingeschränkt freistrahlfähig. Bereits bei Dosiervolumina von einigen Mikrolitern und weniger wird keine vollständige Flüssigkeitsabgabe im Freistrahl erreicht. Darüber hinaus ist gerade bei geringen Dosiervolumina die Flüssigkeitsaufnahme erheblich von der Eintauchtiefe der Pipettenspitze in die Flüssigkeit und der Ausrichtung der Kolbenhubpipette abhängig. Insbesondere bei Handpipetten kann dies eine beachtliche Fehlerquelle sein. Infolgedessen können mit herkömmlichen Kolbenhubpipetten kleine Volumina nur begrenzt und mit relativ hoher Unpräzision und Unrichtigkeit pipettiert werden.

Nach dem Prinzip der Direktverdrängung arbeitende Dosiersysteme herkömmlicher Bauart haben als "Spritzen" bezeichnete Spitzen mit integriertem Kolben, der mit einer Antriebseinrichtung des Dosiersystemes gekoppelt wird. Sie werden in einem Volumenbereich von etwa 1 µl bis 50 ml eingesetzt. Da kein Gaspolster vorhanden ist und der Kolben in unmittelbarem Kontakt mit der zu pipettierenden Probe steht, kommen Direktverdränger insbesondere beim Dosieren von Flüssigkeit mit hohen Dampfdrücken, hohen Viskositäten oder hohen Dichten zum Einsatz. Der Fehler aufgrund unterschiedlicher Längung des Gaspolsters wird bei diesem Systemtyp vermieden. Das Dosieren kleiner Volumina ist jedoch allenfalls bis herunter zu etwa 1 µl mit der erforderlichen Genauigkeit möglich. Auch sind Direktverdrängerspritzen, die solche Flüssigkeitsvolumina im Freistrahl dosieren können, verhältnismäßig teuer.

Aus der EP-A-0 865 824 ist ein ventilloses Mikrodosiersystem bekannt.

Aus der WO 99/10099 ist ein Mikrodosiersystem mit einem Reservoir, einer Mikromembranpumpe, deren Eingang mit dem Reservoir verbunden ist, einem Freistrahldosierer, dessen Eingang mit dem Ausgang der Mikromembranpumpe verbunden ist, einer mit dem Ausgang des Freistrahldosierers verbundenen Dosieröffnung und einer mit der Mikromembranpumpe und dem Freistrahldosierer in Wirkverbindung stehenden Dosiersteuerung bekannt. Die Mikromembranpumpe kann Flüssigkeit aus dem Reservoir in den Freistrahldosierer pumpen. Der Freistrahldosierer kann die eingepumpte Flüssigkeit im Freistrahl abgeben. Die Freistrahlfähigkeit ermöglicht ein verschleppungsfreies Dosieren von Dosiermengen im Bereich von 1 nl bis zu einigen Mikrolitern bei hohen Dosiergenauigkeiten. Wenn mit einer anderen Flüssigkeit dosiert werden soll, muß zur Vermeidung von Verschleppungen entweder dieses direkt verdrängende Mikrodosiersystem gereinigt oder gegen ein sauberes Mikrodosiersystem ausgetauscht werden.

Aus derselben Druckschrift ist eine Mikrodosiervorrichtung bekannt, die eine Mikromembranpumpe aufweist, die eine Hilfsflüssigkeitssäule verschiebt, die entsprechend einem Pipettenkolben Flüssigkeit durch eine Dosieröffnung in eine Pipettenspitze einsaugt bzw. aus dieser ausstößt. Das gewünschte Dosiervolumen wird über die Steuerung des bekannten Schlagvolumens der Mikromembranpumpe erreicht. Nach einem Dosiervorgang kann die Pipettenspitze und ein Teil der Hilfsflüssigkeitssäule verworfen werden. Bei diesem System läuft die Flüssigkeit aus der Dosieröffnung ab und kann auf ein Substrat gegeben werden. Eine Flüssigkeitsabgabe im Freistrahl ist nicht möglich. Fehler können insbesondere durch Benetzungseffekte eintreten, ferner durch unterschiedliche Eintauchtiefe und Ausrichtung. Die Einsetzbarkeit für die Dosierung kleinster Flüssigkeitsvolumina ist deshalb begrenzt. Außerdem besteht wegen der Berührung von Pipettenspitze und Substrat die Gefahr von Kontaminationen.

Davon ausgehend liegt der Erfindung die Aufgabe zugrunde, ein Mikrodosiersystem zum Dosieren kleinster Flüssigkeitsvolumina im Mikroliter- und Submikroliterbereich mit erhöhter Genauigkeit und verringerter Kontaminations- und Verschleppungsgefahr zu schaffen.

Die Aufgabe wird durch ein Gaspolster-Mikrodosiersystem gemäß Anspruch 1 gelöst. Vorteilhafte Ausgestaltungen des Systems sind in den Unteransprüchen angegeben.

Ein Mikrodosiersystem im Sinne dieser Anmeldung ist ein Dosiersystem, das der Dosierung kleiner Flüssigkeitsmengen im Mikroliterbereich und Submikroliterbereich dient (ca. 50 µl bis ca. 1 Nanoliter). Charakteristisch für diese Mikrodosiersysteme sind Mikropumpen, die in Mikrosystemtechnik ausgeführt sind. Die mikrosystemtechnische Herstellung umfaßt insbesondere den Einsatz der folgenden Materialien: Halbleiter und/oder Kunststoffe und/oder Glas und/oder Keramik und/oder Metalle. Diese werden mittels geeigneter Fertigungsverfahren der Mikrotechnik bzw. Mikrostrukturierung, z.B. Lithographie und Ätzverfahren (bei Halbleitern) oder Liga-Verfahren (bei Metallen, Kunststoffen und Keramiken) bearbeitet.

Bei der Mikropumpe kann es sich insbesondere um eine Mikromembranpumpe handeln. Eine Mikromembranpumpe im Sinne dieser Anmeldung ist eine Pumpe mit einem Hohlraum, der von mindestens einer Membran begrenzt wird, der ein Aktuator (Antrieb) zugeordnet ist. Der Aktuator kann insbesondere ein Piezoaktuator sein. Es kommen jedoch auch andere Aktuatoren in Betracht, z.B. thermisch wirkende Aktuatoren. Eine Mikromembranpumpe kann ventillos sein, so daß sie als Verdrängungseinrichtung zur Verdrängung eines Volumens in einem Hub wirkt. Sie kann aber auch mit Ventilen ausgeführt sein, die so geschaltet werden, daß mehrere aufeinanderfolgende Hübe der Membran einen Volumenstrom ergeben. Passive Ventile, die durch die anliegenden Drucke gesteuert werden, ermöglichen grundsätzlich nur einen unidirektionalen Betrieb der Mikromembranpumpe, d.h. einen Volumenstrom in nur einer Richtung. Aktive Ventile, die von einer Steuereinrichtung gezielt geschaltet werden, ermöglichen auch einen bidirektionalen Betrieb der Mikromembranpumpe, d.h. einen Volumenstrom in verschiedenen Richtungen.

Es kommen auch andere Ausführungen der Mikropumpe in Betracht, insbesondere als Mikrozahnradpumpe, Mikroflügelradpumpe oder Mikrodiffusionspumpe.

Die Erfindung basiert auf der Verdrängung eines Gaspolsters (insbesondere eines Luftpolsters) mittels einer Unter- oder Überdruck-Gasentladung. Hierfür wird bei dem Mikrodosiersystem mittels einer gasfördernden Mikropumpe ein Unterdruck oder Überdruck erzeugt, der einige 100 mbar betragen kann. Über die Pumprate (d.h. den geförderten Volumenstrom) oder die Volumenverdrängung der Mikropumpe ist der Unterdruck oder Überdruck genau steuerbar. Gasfördernde Mikropumpen fördern bei jedem Membranschlag ein definiertes Gasvolumen. Auch bei anderen Ausführungen der Mikropumpe ist die Abhängigkeit der Pumprate oder Volumenverdrängung von der Betätigung der Mikropumpe bekannt oder kann ermittelt werden.

Grundsätzlich kann der von der Mikropumpe erzeugte Unterdruck oder Überdruck direkt auf das Flüssigkeitsreservoir wirken. Für einen hohen Überdruck bzw. Unterdruck kann insbesondere durch eine entsprechend große wirksame Verdrängerfläche (z.B. Membranfläche) der Mikropumpe gesorgt werden (z.B. an einer oder mehreren Membranen). Die Verbindung weist Ventileinrichtungen auf. Durch Sperren der Ventileinrichtungen und Betätigen der Mikropumpe kann ein besonders hoher Unterdruck oder Überdruck aufgebaut werden. Durch Öffnen der Ventileinrichtungen ist das Flüssigkeitsreservoir mit dem Unterdruck oder Überdruck beaufschlagbar, wodurch die Aufnahme oder Abgabe von Flüssigkeit in das Flüssigkeitsreservoir bewirkt wird. Die Ventileinrichtungen in der Verbindung bzw. weitere Ventileinrichtungen in einer davon abzweigenden Lüftung können zugleich aktive Ventile der Mikropumpe sein.

Bevorzugt wird ein Gasreservoir des Gasverdrängungssystems von der Mikropumpe mit einem Unterdruck oder Überdruck "aufgeladen". Das Gasreservoir kann insbesondere in der Mikropumpe und/oder getrennt von dieser ausgebildet sein. Das Aufladen erfolgt vor der Aufnahme bzw. Abgabe von Flüssigkeit. Bevorzugt erfolgt dies durch mehrere Membranhübe einer Mikromembranpumpe. Mittels Ventileinrichtungen in der Verbindung zwischen Gasverdrängungssystem und Flüssigkeitsreservoir wird das Gasreservoir vom Flüssigkeitsreservoir abgetrennt bzw. die Druckentladung in das Flüssigkeitsreservoir gesteuert.

Anders als bei herkömmlichen Gaspolster-Dosiersystemen ist die Dosierung mit sehr hoher Genauigkeit möglich, weil die Randbedingungen der Dosierung besonders günstig gewählt und genau festlegbar sind: Durch die Höhe des Unterdruckes oder Überdruckes und dessen genaue Steuerbarkeit kann nämlich sichergestellt werden, daß Benetzungs- bzw. Kapillareffekte, deren inhärente Drücke klein gegenüber dem Unterdruck oder Überdruck sind, bei der Aufnahme und Abgabe von Flüssigkeit überwunden werden und diese daher nicht beeinträchtigen. Darüber hinaus ist der Überdruck so steuerbar, daß die Flüssigkeitsabgabe im Freistrahl erfolgen kann und genau das abzugebende Flüssigkeitsvolumen abgegeben wird. Inhärente, durch Gasentladung verursachte Temperaturänderungen der Gasbefüllung sind durch den die Aufnahme und Abgabe ausschließlich bewirkenden Differenzdruck zur Umgebung unkritisch. Zudem werden Kontaminationen und Verschleppungen vermieden, weil das System mit einem Gaspolster arbeitet und die Freistrahlabgabe ohne Substratberührung erfolgen kann.

Für die Dosiergenauigkeit ist von Vorteil, daß das System eine genaue zeitliche Steuerung der Beaufschlagung des Flüssigkeitsreservoirs mit dem Unterdruck oder Überdruck ermöglicht, der günstige Voraussetzungen für die Flüssigkeitsaufnahme oder Flüssigkeitsabgabe schafft. Bei dem System mit Ventileinrichtungen kann der Beginn der Beaufschlagung durch Öffnen der Ventileinrichtungen genau gesteuert werden. Die Beendigung bzw. der Abbau des Unterdruckes oder Überdruckes ist insbesondere durch Schließen der Ventileinrichtungen möglich, weil ein Druckausgleich in dem oberhalb des Flüssigkeitsvolumens noch verbleibenden Gaspolster geringen Volumens sehr schnell erfolgen und bei der Ermittlung oder Steuerung der Dosiermenge berücksichtigt werden kann. Vorzugsweise kann der Unterdruck oder Überdruck dadurch abgebaut werden, daß eine Ventileinrichtung in einer Lüftungsverbindung des Gasverdrängungssystems zur Umgebung geöffnet wird. Ferner ist es möglich, den auf das Flüssigkeitsvolumen wirkenden Unterdruck oder Überdruck durch einen entgegengesetzten Überdruck oder Unterdruck abzubauen, der insbesondere durch Pumpen bzw. Zuschalten eines entsprechend "aufgeladenen" Gasreservoirs aufgebracht werden kann.

Vorzugsweise wird das Flüssigkeitsreservoir schlagartig mit dem Unterdruck oder Überdruck beaufschlagt bzw. wird der Unterdruck oder Überdruck schlagartig abgebaut, wodurch erreicht werden kann, daß die vorteilhaften Druckbedingungen vom Anfang bis zum Ende des Dosiervorganges herrschen. Das schlagartige Beaufschlagen oder Abbauen der Druckbedingungen kann insbesondere durch eine schlagartige Membranverformung oder durch schlagartiges Öffnen oder Schließen von Ventileinrichtungen erreicht werden. Bevorzugt wird die Unter- oder Überdruck-Gasentladung impulsartig durchgeführt, und insofern auch als "Impulsdruckmethode" bezeichnet. Die Impulsdruckmethode ermöglicht durch Anwendung eines erhöhten, in der Höhe genau steuerbaren Unterdruckes oder Überdruckes in einem genau festlegbaren Zeitabschnitt eine erhöhte Dosiergenauigkeit.

Nach schlagartigem Abbau des Unterdruckes oder Überdruckes wird das schlagartige Beendigen des Ansaugens oder Abgebens von Flüssigkeit durch die den Trägheitskräften des Flüssigkeitsvolumens entgegenwirkenden Kräfte bewirkt. Hierzu können insbesondere die Reibungskräfte der Gefäßwandung des Flüssigkeitsreservoirs auf das Flüssigkeitsvolumen beitragen sowie Grenzflächenkräfte zwischen der Begrenzung des Flüssigkeitsreservoirs und dem Flüssigkeitsvolumen. Dies kann insbesondere durch Formgebung, Bemessung und Materialwahl des Flüssigkeitsreservoirs gefördert werden. Es ist aber auch möglich, das schlagartige Beendigen des Ansaugens oder Abgebens durch zusätzliches Aufbringen eines den Trägkeitskräften entgegenwirkenden Über- oder Unterdruckes zu bewirken, der mittels einer Pumpe bzw. eines Gasreservoirs bereitgestellt werden kann. So kann das Ansaugen schlagartig durch schlagartigen Abbau des Unterdruckes und Aufbringen eines Überdruckes und das Abgeben durch schlagartigen Abbau des Überdruckes und Aufbringen eines Unterdruckes beendigt werden. Wenn das Flüssigkeitsvolumen abgestoppt ist, kann der zusätzliche Über- bzw. Unterdruck wieder abgebaut werden.

Erstmalig wird damit mittels eines Gaspolstersystems das Pipettieren, Dispensieren und Handling von kleinsten Flüssigkeitsvolumina im Mikroliter- und Submikroliterbereich (z.B. von ca. 0,1 bis ca. 10 µl) mit hoher Genauigkeit (z.B. Dosierpräzision von 1 %) ermöglicht. Da Flüssigkeitskontakt ausschließlich mit dem Flüssigkeitsreservoir erfolgt, kann dieses vorteilhaft als verhältnismäßig einfaches Disposable ausgeführt sein, das nach Gebrauch durch ein sauberes Flüssigkeitsreservoir ersetzbar ist, wodurch Verschleppungen vermieden werden. Durch die Abgabe der Flüssigkeit im Freistrahl wird überdies die Übertragung von Flüssigkeitsvolumina ohne Berührung von System und Substrat ermöglicht und werden Kontaminationen vermieden. Gegenüber den eingangs erwähnten klassisch-mechanischen Pipetten und Dispensern sowie dem eingangs erwähnten Mikrodosiersystem ist eine beträchtliche Reduktion des Reagenzienverbrauches möglich. Die Erfindung gestattet Anwendungen insbesondere bei der Befüllung von Mikrotiterplatten mit kleinsten Aufnahmevolumina, Beschickung von Analytik-Mikrofluidsystemen (z.B. für die Kapillarelektrophorese), Aufbringen von Reagenzien auf Biochips etc.

Das System ist sowohl für die Aufnahme als auch für die Abgabe von Flüssigkeitsvolumina verwendbar. Mit Vorteil ist es aber auch ausschließlich für die Aufnahme oder ausschließlich für die Abgabe von Flüssigkeitsvolumina verwendbar, beispielsweise wenn ein bestimmtes Flüssigkeitsvolumen im System verarbeitet werden soll oder auf andere Weise in das System gelangt. Die Erfindung schließt somit Systeme ein, die beide oder nur eine der beiden Anwendungen ermöglichen.

Die Ermittlung oder Steuerung des jeweils aufgenommenen oder abgegebenen Flüssigkeitsvolumens kann auf verschiedene Weisen erfolgen. So ist es möglich, versuchsweise zu ermitteln, unter welchen Systembedingungen (z.B. Höhe des Unterdruckes oder Überdruckes, Schaltzeitpunkte der Ventileinrichtungen, Arbeiten oder Ruhen der Mikropumpe, Pumprate oder Volumenverdrängung der Mikropumpe) ein bestimmtes Volumen einer bestimmten Flüssigkeit von dem System aufgenommen oder von diesem abgegeben wird. Das System kann die Aufnahme oder Abgabe dieses Flüssigkeitsvolumens mit hoher Genauigkeit wiederholen, wenn es unter denselben Systembedingungen betrieben wird.

So kann beispielsweise für das Pipettieren einer gewünschten Flüssigkeitsmenge der Unterdruck im Gasverdrängungssystem und/oder die Öffnungsdauer der Ventileinrichtungen genau so gesteuert werden, daß die gewünschte Flüssigkeitsmenge aufgenommen wird. Ferner kann der Überdruck und/oder die Öffnungsdauer genau so gesteuert werden, daß diese bestimmte Flüssigkeitsmenge sicher im Freistrahl abgegeben wird. Dabei kann der Überdruck solange anliegen, bis das Flüssigkeitsvolumen vollständig ausgetrieben ist. Es ist jedoch auch möglich, den Unterdruck im Gasreservoir und die Öffnungsdauer der Ventileinrichtungen so zu steuern, daß mindestens das aufzunehmende Flüssigkeitsvolumen aufgenommen wird und danach den Überdruck sowie die Öffnungsdauer so zu steuern, daß genau das vorgegebene Flüssigkeitsvolumen abgegeben wird. Letztere Vorgehensweise kann auch beim Dispensieren beschritten werden, wobei zunächst mindestens die Summe aller abzugebenden Flüssigkeitsvolumina aufgenommen werden muß. Darüber hinaus können auch die Systembedingungen für das Aufnehmen oder Abgeben mehrerer bestimmter Flüssigkeitsvolumina bzw. bestimmter Volumina mehrerer verschiedener Flüssigkeiten gefunden und für das genaue Aufnehmen und Abgeben entsprechender Flüssigkeitsvolumina herangezogen werden.

Das System weist einen - vorzugsweise temperaturkompensierten - Drucksensor zum Erfassen des Druckes im Gasverdrängungssystem auf, mit dem die Dosiersteuerung in Wirkverbindung steht, um das aufgenommene oder abgegebene Flüssigkeitsvolumen zu ermitteln oder auf einen vorgegebenen Wert zu steuern. So kann der Sensor eine Änderung des Unterdruckes oder Überdruckes nach dem Öffnen der Ventileinrichtung ermitteln und kann die Dosiersteuerung unter Zuhilfenahme des Boyle-Mariottschen Gesetzes oder einer anderen Gaszustandsgleichung gegebenenfalls in Verbindung mit das Strömungsverhalten des Gases im Mikrodosiersystem beschreibenden Gleichungen die Änderung des Gasvolumens errechnen, die dem aufgenommenen oder abgegebenen Flüssigkeitsvolumen entspricht. Diese Ermittlung des Flüssigkeitsvolumens kann jedoch insbesondere durch fertigungsbedingte und dadurch unbekannte Variationen des Gasvolumens im System beeinflußt werden. Entsprechend der obigen Ausgestaltung, die auf der versuchsweisen Ermittlung der Systembedingungen für die Aufnahme oder Abgabe bestimmter Flüssigkeitsvolumina basiert, kann sich diese Ausgestaltung ebenfalls nur auf die Aufnahme oder auf die Abgabe oder auf die Aufnahme und die Abgabe bestimmter Flüssigkeitsvolumina beziehen.

Besonders vorteilhaft ist eine Ausgestaltung, nach der die Dosiersteuerung den Unterdruck oder Überdruck im Gasverdrängungssystem beim Ansaugen oder Abgeben von Flüssigkeit durch Erfassen des darin herrschenden Druckes mittels des Drucksensors und Steuern der Pumprate oder Volumenverdrängung der Mikropumpe auf einen vorgegebenen Wert regelt und das aufgenommene oder abgegebene Flüssigkeitsvolumen über die bei diesem Druck bekannte Pumprate oder Volumenverdrängung der Mikropumpe ermittelt. Diese Ausgestaltung basiert auf der Überlegung, daß das von der Mikropumpe beförderte Gasvolumen zur Konstanthaltung des Unterdruckes oder Überdruckes im Gasverdrängungssystem sehr genau dem aufgenommenen Flüssigkeitsvolumen entspricht. Die Regelung des Unterdruckes oder Überdruckes auf einen vorgegebenen Wert kann damit vorteilhaft zur Ermittlung oder Steuerung des jeweils aufgenommenen oder abgegebenen Flüssigkeitsvolumens herangezogen werden. Die Dosiergenauigkeit wird dabei im wesentlichen durch die Genauigkeit der Druckerfassung mittels des Drucksensors bestimmt. Entsprechend den obigen Ausgestaltungen kann sich diese Ausgestaltung ebenfalls nur auf die Aufnahme oder auf die Abgabe oder auf die Aufnahme und die Abgabe bestimmter Flüssigkeitsvolumina beziehen.

Das aufzunehmende bzw. abzugebende Flüssigkeitsvolumen kann fest vorgegeben oder einstellbar sein.

Gemäß einer weiteren vorteilhaften Ausgestaltung weist das Flüssigkeitsreservoir einen als Düse ausgebildeten Flüssigkeitsdurchgang auf. Die Düse begünstigt das Erreichen einer Geschwindigkeit in der Austrittsöffnung, die zur Ausbildung eines Freistrahles führt. Darüber hinaus kann der Querschnitt im Speicherraum so groß bemessen sein, daß die Flüssigkeitsströmung dort im wesentlichen ein Pfropfenprofil hat und es nicht zum Verbleib von Restflüssigkeit an der Wandung des Speicherraumes durch Adhäsion kommt. Ferner können im Bereich der Düse erhöhte Reibungskräfte auf die Flüssigkeit wirken, die bei Abbau des Unterdruckes oder Überdruckes die Trägheitskräfte der Flüssigkeit überwiegen und die weitere Aufnahme oder Abgabe von Flüssigkeit unterdrücken. Ferner kann insbesondere an einer Düse die Austrittsöffnung des Flüssigkeitsreservoirs mit so geringem Querschnitt ausgeführt sein, daß bei hydrophober Oberfläche die Kapillarkräfte bis zu einer beachtlichen Eintauchtiefe das Eindringen von Flüssigkeit in die Austrittsöffnung durch bloßes Eintauchen derselben in die Flüssigkeit verhindern. Hierdurch kann eine insbesondere für Handgeräte ausreichende Unabhängigkeit der Flüssigkeitsaufnahme von der Eintauchtiefe erreicht werden. Des weiteren kann durch eine hydrophobe Oberfläche eine eventuell vorhandene Adhäsion in der Düse beim Flüssigkeitsabgeben vermieden werden.

Außer der Mikropumpe können vorteilhaft eine oder mehrere weitere Komponenten des Systems mikrosystemtechnisch ausgeführt sein, insbesondere das Gasreservoir, die Ventileinrichtungen, die Dosiersteuerung, der Drucksensor, die weiteren Ventileinrichtungen, das Flüssigkeitsreservoir und sämtliche Verbindungen zwischen den Komponenten oder zwischen diesen und Umgebung. Dies begünstigt eine Miniaturisierung des Systems und eine kostengünstige Massenfertigung. Außerdem kann durch mikrosystemtechnische Ausführung sichergestellt werden, daß die Komponenten mit der gewünschten Schnelligkeit arbeiten. Darüber hinaus sind mikrosystemtechnisch feinste Strukturen mit der erforderlichen Genauigkeit herstellbar. Besonders vorteilhaft ist die Anordnung einer oder mehrerer Komponenten des Systems auf einem Mikrofluidboard, das auch Verbindungen zwischen den Komponenten bzw. mit Umgebung umfassen kann.

Die Miniaturisierung der gasführenden Komponenten des Systems beispielsweise durch mikrosystemtechnische Ausführung ist auch aus folgenden Gründen von Vorteil: Beim Beaufschlagen des Flüssigkeitsreservoirs mit dem Unterdruck oder Überdruck sinkt der Unterdruck oder Überdruck schlagartig ab, da er sich vom Gasverdrängungssystem auf das Flüssigkeitsreservoir erstreckt. Dieser Druckabfall sollte möglichst gering ausfallen. Darüber hinaus ist es aber auch von Vorteil, das Gasverdrängungssystem mit einem geringen Volumen auszuführen, weil dann eine Änderung des Unterdruckes oder Überdruckes durch Flüssigkeitsaufnahme oder Abgabe vom Drucksensor besser detektierbar ist und damit die Ermittlung oder Steuerung des aufgenommenen oder abgegebenen Flüssigkeitsvolumens genauer durchgeführt werden kann. Aus diesen Gründen wird das Totvolumen, d.h. das Volumen des Gaspolsters, das sich über verschiedene Komponenten des Systems erstreckt, vorzugsweise etwa gleich dem maximal aufzunehmenden Flüssigkeitsvolumen dimensioniert.

Die Erfindung wird nachfolgend anhand der anliegenden Zeichnungen einiger Ausführungsbeispiele näher erläutert. In den Zeichnungen zeigen:
- Fig. 1: Gaspolster-Mikrodosiersystems mit Gasreservoir in einer grobschematischen Darstellung;
- Fig. 2: Geschwindigkeitsprofile der Strömung in einem Längsschnitt durch das Flüssigkeitsreservoir;

- Fig. 3: a bis c Zeitverhalten des Druckes im Regelkreis bei einer Flüssigkeit mit der Viskosität η (Fig. 3a), einer Flüssigkeit mit der doppelten Viskosität 2 η (Fig. 3b) und bei Unterstützung des Flüssigkeitsstoppes durch einen negativen Druckimpuls (Fig. 3c) jeweils in einem Druck-Zeit-Diagramm;
- Fig. 4: Abhängigkeit der Förderleistung vom Gegendruck einer typischen Mikromembranpumpe in einem Förderleistungs-Druck-Diagramm;
- Fig. 5: Gaspolster-Mikrodosiersystem mit Druckregelung mit zwei Mikromembranpumpen in einer grobschematischen Darstellung;
- Fig. 6: a und b Gaspolster-Mikrodosiersystem mit von dem System der Fig. 5 abweichenden Ventileinrichtungen (Fig. 6a) und zusätzlicher Einrichtung zum Druckhalten (Fig. 6b);
- Fig. 7: Gaspolster-Mikrodosiersystem mit von dem System der Fig. 5 abweichenden Ventileinrichtungen;
- Fig. 8: Gaspolster-Mikrodosiersystem mit Druckregelung mit nur einer Mikromembranpumpe in grobschematischer Darstellung;
- Fig. 9: Gaspolster-Mikrodosiersystem mit von dem System der Fig. 6 abweichenden Ventileinrichtungen;
- Fig. 10: Mikrofluidboard in einem grobschematischen Querschnitt;
- Fig. 11: modulares Mikrofluidsystem mit mehreren Mikrofluidboarden und einem Verbindungsbord in einem grobschematischen Querschnitt;
- Fig. 12: modulares Mikrofluidsystem mit einem Mikrofluidboard und einem Verbindungsboard für parallele Flüssigkeitsreservoire in einem grobschematischen Querschnitt;
- Fig. 13: Magazinspeisung eines Mikrodosiersystems mit Flüssigkeitsreservoir in einem grobschematischen Längsschnitt;
- Fig. 14: ein Verteilungssystem in einem grobschematischen Längsschnitt;
- Fig. 15: ein Mischsystem in einem grobschematischen Längsschnitt;
- Fig. 16: Gaspolster-Mikrodosiersystem mit aktiven Ventilen und Drucksensor am Verbindungskanal in einer grobschematischen Darstellung;
- Fig. 17: Zeitverhalten des Druckes bei Aufnahme von Flüssigkeit mit dem System von Fig. 16;
- Fig. 18: Gaspolster-Mikrodosiersystem mit Mikromembranpumpe mit aktiven Ventilen und Drucksensor an Gasreservoir in einer grobschematischen Darstellung;
- Fig. 19: Zeitverhalten des Druckes bei Aufnahme von Flüssigkeit mit dem System von Fig. 18;
- Fig. 20: Gaspolster-Mikrodosiersystem mit Mikromembranpumpe mit aktiven Ventilen und Differenzdruckmessung in grobschematischer Darstellung;
- Fig. 21: Zeitverhalten des Druckes bei Aufnahme von Flüssigkeit mit dem System von Fig. 20;
- Fig. 22: Gaspolster-Mikrodosiersystem mit Mikromembranpumpe mit nur einem aktiven Ventil in grobschematischer Darstellung;
- Fig. 23: Gaspolster-Mikrodosiersystem mit Mikromembranpumpe und mehreren parallel geschalteten Flüssigkeitsreservoiren.

Bei der nachfolgenden Erörterung verschiedener Ausführungsbeispiele sind dieselben Merkmale mit denselben Bezugsziffern bezeichnet. Anstatt der angegebenen Mikropumpen sind auch andere zur Verfügung stehende oder noch zu entwickelnde Mikropumpen geeignet.

### 1. Allgemeines

Den Ausführungsbeispielen liegen folgende Überlegungen und Zielsetzungen zugrunde:

Das Dosieren kleinster Flüssigkeitsvolumina erfolgt durch Einsatz der Mikrosystemtechnik. Für eine geringe Dosierungspräzision und eine hohe Schnelligkeit werden Mikrofluidkomponenten eingesetzt, die hohe Anforderungen an die Zeitdynamik und die Förderleistung erfüllen.

Sämtliche Ausführungen basieren auf der Luftpolsterverdrängung mit impulsartiger Unter- oder Überdruck-Gasentladung auf das zu dosierende Flüssigkeitsvolumen, wobei die Flüssigkeit ausschließlich Kontakt zu einem Flüssigkeitsreservoir hat, das insbesondere als austauschbare Pipettenspitze ausgeführt sein kann.

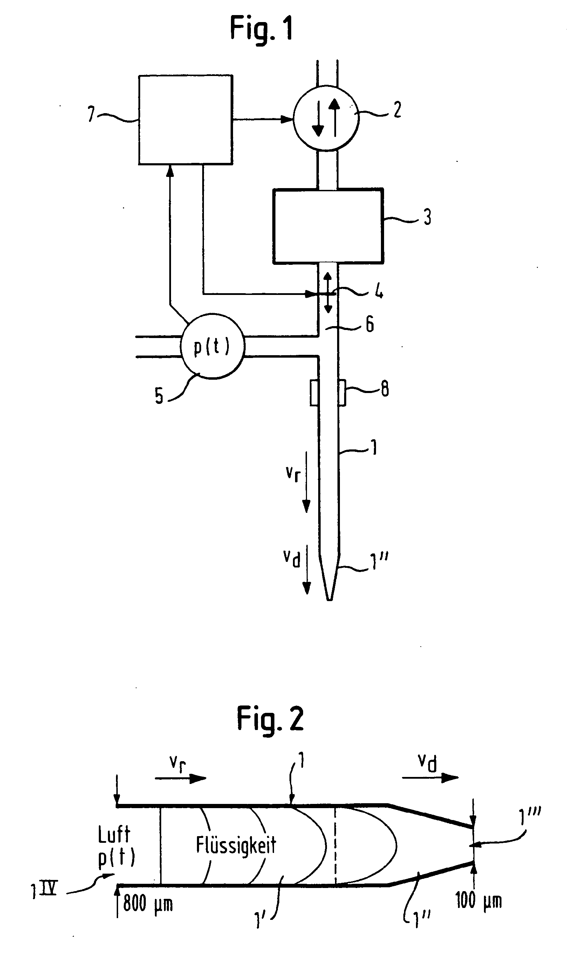

Das Prinzip wird anhand des Ausführungsbeispieles von Fig. 1 erläutert: Ein Flüssigkeitsreservoir 1 ist mit einer Mikropumpe 2 (z.B. einer Mikromembranpumpe) verbunden. Nach Aufbau eines Unterdrucks bzw. Überdrucks mit Hilfe der Mikropumpe 2 in einem Gasreservoir 3 wird dieses schlagartig über Ventileinrichtungen 4 mit dem Flüssigkeitsreservoir 1 verbunden. Dabei kann das Volumen des Gasreservoirs 3 dem Volumen des Flüssigkeitsreservoirs 1 etwa entsprechen, so daß beim Druckausgleich mit dem doppelten Volumen der Über- bzw. Unterdruck nur etwa halbiert wird. Im Gegensatz zur Ausbildung eines stationären Druckausgleichs bei herkömmlichen mechanischen Luftpolsterpipetten erfolgt also ein dynamischer Druckausgleich durch Schalten der Ventileinrichtungen 4 zwischen einem Gas- 3 und einem Flüssigkeitsreservoir 1.

Darüber hinaus erfolgt eine dynamische Regelung des Druckes im Gasverdrängungssystem. Hierfür ist gemäß Fig. 1 ein Drucksensor 5 an einen Verbindungskanal 6 zwischen Gasreservoir 3 und Flüssigkeitsreservoir 1 angeschlossen. Das Aufnehmen bzw. Abgeben von Flüssigkeit vor Erreichen des stationären Druckgleichgewichtes wird über das Schalten der Ventileinrichtungen 4 gestoppt. Vorstehende Abläufe werden von einer Dosiersteuerung 7 gesteuert, die einen Regler für die Druckregelung umfassen kann.

Die Aufnahme und Abgabe von Flüssigkeit wird nicht durch zeitabhängige Trägheitskräfte der bewegten Flüssigkeitsmasse, sondern durch Reibungskräfte bestimmt, die durch die Viskosität und das Strömungsprofil der Flüssigkeit beeinflußt werden. Diese Reibungskräfte können im wesentlichen auf einen Bereich 1" des Flüssigkeitsreservoirs 1 begrenzt werden, um einen zu hohen Druckabfall zu vermeiden.

Dies kann gemäß Fig. 2 dadurch erfolgen, daß das Flüssigkeitsreservoir 1 angrenzend an einen Speicherraum 1' als Flüssigkeitsdurchgang eine Düse 1" mit einer Austrittsöffnung 1'" aufwei um zwischen Speicherraum 1' und Düse 1" eine Geschwindigkeitsübersetzung zu erzeugen. Diese fluidische Übersetzung dient einerseits der Erzeugung einer genügend großen Geschwindigkeit bei der Abgabe im Freistrahl mit einer Strömungsgeschwindigkeit in 1" von ca. 1 bis 2 m/sec. Andererseits dient sie der Vermeidung eines zu hohen Förderdruckes im Speicherraum 1', der beispielsweise in einer Kapillare ausgebildet sein kann. Darüber hinaus kann die erhöhte Reibung in der Düse 1" das augenblickliche Stoppen der Flüssigkeitsaufnahme bzw. -abgabe unterstützen, wenn der Unterdruck oder Überdruck am Gasdurchgang 1^{IV} augenblicklich abgebaut wird.

Beispielsweise können zur Zeit Mikromembranpumpen 2 einen Gasüberdruck von etwa 300 bis 500 mbar erzeugen können. Dieser wird beim Druckausgleich aus einem Gasreservoir 3 in ein Flüssigkeitsreservoir 1 reduziert, beispielsweise halbiert. Für die Flüssigkeitsabgabe im Freistrahl aus einem 50 mm langen Flüssigkeitsreservoir mit einem Düsendurchmesser von 0,1 mm ergibt sich aus einem Gasüberdruck von etwa 100 mbar ein Volumenstrom von etwa 25 µl/sec.

Der Durchmesser der Austrittsöffnung 1"' der Düse 1" ist durch den bei gegebenem Druck resultierenden Volumenstrom bestimmt. Dieser Volumenstrom ist einerseits durch die Förderleistung der Mikropumpe 2 und andererseits durch die zeitliche Dynamik des Regelkreises begrenzt. Dementsprechend ist der Querschnittsverlauf des Flüssigkeitsreservoirs im Bereich der Düse direkt mit den Fördereigenschaften der Mikropumpe korreliert.

Das Zeitverhalten der Regelung bei der Aufnahme wird durch folgende Beispielsrechnung veranschaulicht: Eine Druckdifferenz von ca. 50 mbar erzeugt in einer Düse mit einem Durchmesser von 100 µm, einer Länge von 1 mm und einem Übersetzungsverhältnis vᵣ/v_{d} von 64 (vᵣ ist die Geschwindigkeit im Speicherraum neben der Düse und vd ist die Geschwindigkeit in der Austrittsöffnung der Düse) einen Volumenstrom von 7 µl/sec (Aqua Bidest). Also wird ein Volumen von 1 µl in 143 ms aufgenommen. Einer Genauigkeit von 1 % entspricht ein Volumeninkrement von 10 nl, das in 1,4 ms aufgenommen wird. Die Dosierung eines Volumens von 1 µl mit einer Genauigkeit von 1 % setzt also eine Zeitdynamik sämtlicher Komponenten und auch ein Druckausgleichsverhalten im Totvolumen (d.h. im Gaspolster) des Systems im Millisekunden-Bereich voraus.

Mit Komponenten in Mikrosystemtechnik ist vorstehende Anforderung an die Zeitdynamik erfüllbar, insbesondere wenn diese Komponenten mittels eines mikrofluidischen Boards in integraler, planer Bauweise (gedeckelte Kanäle; SMD-Technik, d.h. "surface mount device"-Technik) miteinander verbunden werden.

Da die Aufnahme von Flüssigkeit durch die geschwindigkeitsbestimmende Düse 1" näherungsweise proportional zur Druckdifferenz und mit einer konstant hohen Geschwindigkeit erfolgt, sind Einflüsse wie z.B. die Ausrichtung der Düse 1'' (z.B. infolge Handhaltung) und Benetzungseffekte vernachlässigbar, anders als beim stationären Druckausgleich mit transienter und daher evaneszenter Druckdifferenz. Beim erfindungsgemäßen Aufnahmemechanismus erzeugen die Reibungskräfte allerdings eine von der Viskosität abhängige Flüssigkeitsbewegung. Diese kann jedoch vom Mikrodosiersystem inhärent gemessen und berücksichtigt werden und wird daher von diesem System automatisch kompensiert (siehe Abschnitt 2). Wesentlich größere Viskositätsunterschiede können zur Vermeidung größerer zeitlicher Aufnahme- bzw. Abgabedauer durch Unter- bzw. Überdruckerhöhung kompensiert werden, so daß mit einer einzigen Ausführung des Flüssigkeitsreservoirs 1 eine etwa 5 bis 10-fache Viskositätsbreite abgedeckt werden kann. Für darüber hinaus gehende Viskositätsbereiche können Flüssigkeitsreservoire 1 eingesetzt werden, deren Düsenquerschnittsfläche mit der Viskosität skaliert, um im wesentlichen gleiche Strömungs- bzw. Druckverhältnisse zu schaffen.

Vorteilhafterweise kann der Drucksensor 5 auch zur Detektion des Kontaktes des Flüssigkeitsreservoirs 1 mit der Flüssigkeit eingesetzt werden. Hierbei wird mittels der Mikropumpe 2 ein ständiger Gasstrom aus dem Flüssigkeitsreservoir 1 getrieben. Sobald die Austrittsöffnung 1"' Flüssigkeit die Oberfläche berührt, steigt der Druck in dem Flüssigkeitsreservoir 1 an. Dieser Druckanstieg wird vom Drucksensor 5 detektiert und zum Auslösen der Volumenaufnahme eingesetzt.

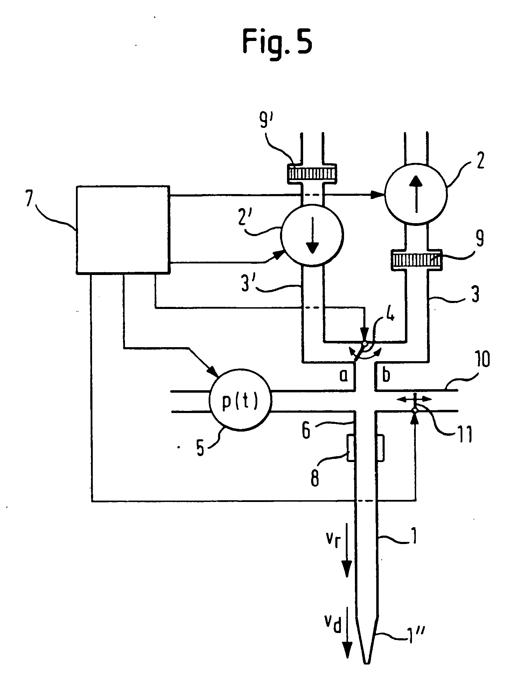

Um Volumenaufnahmefehler infolge einer an der Austrittsöffnung 1'''aufgebauten kleinen Gasblase zu vermeiden, kann entweder der aufgebaute Überdruck über eine Lüftungsverbindung (vgl. Pos. 10 in Fig. 5) entlassen werden oder der Gasstrom bis zum Abperlen der entstandenen Gasblase aufrechterhalten werden. Das Abperlen ist wiederum mit einem Drucksprung verbunden, der detektiert und zum Auslösen der Volumenaufnahme eingesetzt werden kann.

Vorzugsweise wird die Düse 1" oder das gesamte Flüssigkeitsreservoir 1 mit einer flüssigkeitsabweisenden Oberfläche ausgestattet, so daß durch hohe Kapillareffekte eine von der Eintauchtiefe unabhängige Flüssigkeitsaufnahme möglich ist. So entspricht eine Kapillardepression von ca. 15 mbar einer Eintauchtiefe ohne Flüssigkeitsaufnahme von etwa 0,15 m. Darüber hinaus ermöglicht eine flüssigkeitsabweisende Oberfläche das rückstandsfreie Abgeben der Flüssigkeit, da anderenfalls die Adhäsion einer Restmenge in der Düse 1" durch Kapillarkräfte erfolgt.

Das Flüssigkeitsreservoir 1 mit Düse 1" ist z.B. durch ausgezogene Glaskapillaren realisierbar, die zur Hydrophobisierung durch Tauchvorgang z.B. mit Silikon beschichtet sein können. Vorzugsweise werden aus Kunststoff wie z.B. PP, PC, PS hergestellte Flüssigkeitsreservoire eingesetzt, die durch Mikrospritzgußverfahren, aber auch durch nachfolgende Bearbeitungsschritte (z.B. Laserbohrverfahren) die erforderlichen Düsengeometrien aufweisen.

### 2. Geregelte Impulsdruckmethode

Nachfolgend wird der dynamische Prozeß der Aufnahme bzw. Abgabe von Flüssigkeit unter Regelung des dafür bestimmenden Druckes näher erläutert. Gemäß Fig. 1 wird der Druck im Gasverdrängungssystem mittels eines Drucksensors 5 gemessen und von der Dosiersteuerung 7 über die Pumprate der Mikropumpe 2 (hier eine Mikromembranpumpe) der Druck geregelt, d.h. über den von dieser geförderten Gasvolumenstrom.

### 2.1 Funktionsweise des Regelkreises bei Aufnahme

Ein konstanter Unterdruck im Flüssigkeitsreservoir 1 bewirkt einen zeitlich konstanten Volumenstrom der Flüssigkeitsaufnahme. Die Mikropumpe 2 kompensiert im Regelkreis den durch die Aufnahme entstehenden und vom Drucksensor 5 gemessenen Unterdruckverlust.

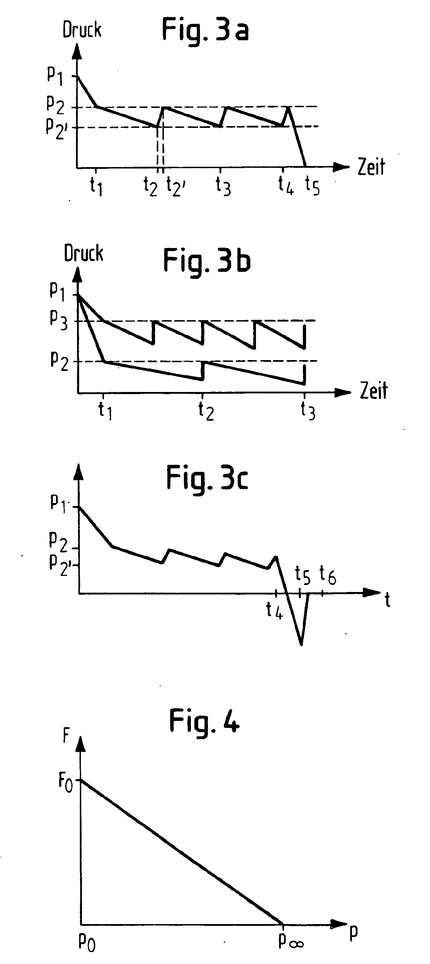

Gemäß Fig. 3a bewirkt zunächst die impulsartige Beaufschlagung des Flüssigkeitsreservoirs 1 mit einem Unterdruck zu einem definierten Zeitbeginn t₁ die Aufnahme, und zwar mit sehr geringer Unpräzision. Die Mikropumpe 2 wird von der Regelung 7 so betätigt, daß der Druck im Flüssigkeitsreservoir 1 stets im wesentlichen den Wert p₂ einhält (siehe Abschnitt 2.2). Die Pumprate mit bekannter, druckabhängiger Förderleistung der Mikropumpe 2 ergibt über die Zeit integriert das von dieser gepumpte Gasvolumen und dementsprechend das in das Flüssigkeitsreservoir 1 aufgenommene Flüssigkeitsvolumen. Gleichzeitig ist das Zeitverhalten der Flüssigkeitsaufnahme in das Flüssigkeitsreservoir 1 ein Maß für die Viskosität der aufgenommenen Flüssigkeit.

Die Mikropumpe 2 wirkt also in diesem Regelkreis als Volumendetektor, denn die von dieser geförderte Gasmenge wird in die geförderte Flüssigkeitsmenge umgerechnet. Die Kopplung von aufgenommenem Flüssigkeitsvolumen und Volumendetektion durch die Mikropumpe 2 in Verbindung mit dem Drucksensor 5 ermöglicht daher eine vom Volumen des Flüssigkeitsreservoirs 1 unabhängige Aufnahme, wodurch Fertigungstoleranzen unschädlich sind. Da unterschiedliche Strömungszustände nur die Dauer des Dosiervorganges beeinflussen, ist das aufgenommene bzw. abgegebene Flüssigkeitsvolumen von der Viskosität, Toleranzen im Düsendurchmesser oder weiteren die Strömung verändernden Parametern unabhängig.

Durch die inkrementale Fördereigenschaft der Mikropumpe 2 ist die aufzunehmende Flüssigkeitsmenge und deren Genauigkeit von Druck, Pumphub und Pumpfrequenz abhängig. Die vom Druck p abhängige Pumprate F der Mikropumpe 2 (vgl. Fig. 4) wird z.B. in einem Initialisierungsvorgang über eine Druckanstiegsmethode in ein bekanntes Volumen bestimmt. Die für jeden Aufnahmevorgang durch den zeitlichen Druckabfall ermittelte Viskosität geht bei vorgegebenem Druck p₂ proportional in die Aufnahme- und Abgabedauer ein. Für gleiche Aufnahme- bzw. Abgabezeiten kann daher bei z.B. verdoppelter Viskosität eine entsprechende Druckverringerung bzw. Druckerhöhung von z.B. p₂ auf p₃ = 2 x p₂ vorgenommen (vgl. Fig. 3b) und dafür gegebenenfalls eine Reihenschaltung von Mikropumpen eingeschaltet werden.

Der Flüssigkeitsstopp nach definierter Volumenaufnahme nach t₄ erfolgt durch eine impulsartige Unterdruckentlassung gegen normale Atmosphäre zwischen t₄ und t₅ (vgl. Fig. 3a). Die im Vergleich zu den Trägheitskräften relativ hohen Reibungskräfte verursachen einen sofortigen Stopp mit Flüssigkeitsabriß im Flüssigkeitsreservoir 1. Zur Unterstützung kann des weiteren zwischen t₅ und t₆ ein negativer Druckimpuls durch eine saugende Mikropumpe eingesetzt werden (vgl. Fig. 3c). Das Nachlaufen von Flüssigkeit durch Kapillarkräfte kann durch einen entsprechenden Unterdruck sukzessiv verhindert werden.

### 2.2 Druck-Zeitverhalten bei der Aufnahme

Gemäß Fig. 3a erfolgt bis zum Zeitpunkt t₁ ein Druckausgleich zwischen Gasreservoir 3 und Flüssigkeitsreservoir 1. Durch die geringen Volumina- und Kanallängen vollzieht sich der Druckausgleich im Submillisekundenbereich und ist daher ausreichend schnell. Der bei t₁ im System sich einstellende Druck p₂ ist an das aufzunehmende Flüssigkeitsvolumen und an die Viskosität der Flüssigkeit angepaßt. So ist der Unterdruck p₂ bei einem kleineren aufzunehmenden Flüssigkeitsvolumen geringer, damit die Strömungs- bzw. Aufnahmegeschwindigkeit herabgesetzt wird und die zeitliche Regelung und dadurch die Genauigkeit der Volumenaufnahme aufrechterhalten bleibt. Durch das Ansaugen der Flüssigkeit fällt der Druck auf eine untere Druckschwelle p_{2'} zum Zeitpunkt t₂ ab. Die Zeitdauer dieses Druckabfalles ist proportional zur Viskosität der Flüssigkeit. Danach erfolgt eine Kompensation des Druckabfalles durch inkrementalen Pumpenhub, d.h. durch eine oder mehrere Membranhübe der Mikropumpe 2. Die Kompensation ist mit Erreichen des Druckes p₂ zum Zeitpunkt t_{2'} erfolgt. Da durch diesen Mechanismus die Viskosität nur den zeitlichen Ablauf beeinflußt, ist das aufzunehmende Volumen von der Viskosität unabhängig.

Danach wiederholt sich dieser Vorgang mehrfach, wobei jeweils zu den Zeitpunkten t₃ und t₄ eine Kompensation des Druckabfalles durch inkrementalen Pumpenhub erfolgt.

Die Pumpenhübe werden aufsummiert und die Flüssigkeitsaufnahme gestoppt, wenn das eingestellte Pumpvolumen erreicht ist.

### 2.3 Abgabe

Die Abgabe von Flüssigkeit erfolgt analog zur Aufnahme: Mit bekannter Viskosität und Geometrie des Flüssigkeitsreservoirs 1, das zwar richtungsabhängige aber bekannte Strömungswiderstände aufweisen kann, erzeugt ein konstanter Überdruck die Abgabe. Die Regelung kann wie bei der Aufnahme so erfolgen, daß die Mikropumpe 2 den Druckverlust kompensiert. Es ist aber auch eine Regelung über die Zeit möglich, indem auf Daten zurückgegriffen wird, die das System bei der Flüssigkeitsaufnahme gewinnt.

Die impulsartige Beaufschlagung des Flüssigkeitsreservoirs 1 mit Überdruck nach t₁ bewirkt die sofortige Formation eines Freistrahls. Die Abgabe im Pipettiermodus erfolgt ohne Flüssigkeitsstopp durch vollständiges Ausblasen. Dann kann auch auf eine Ermittlung des Pumpvolumens verzichtet werden, falls das aufgenommene Flüssigkeitsvolumen ermittelt worden ist und - beispielsweise über zeitliche Steuerung - vollständiges Ausblasen sichergestellt wird.

Da für eine Freistrahlabgabe generell ein Mindestüberdruck vorliegen muß, ist im Dispensiermodus (für kleine Flüssigkeitsvolumina) für eine höhere Zeitdynamik der Regelkreis eventuell zeitgesteuert auszulegen. Der Flüssigkeitsstopp nach definierter Abgabe t₄ erfolgt analog zur Aufnahme durch impulsartige Überdruckentlassung gegen Normalatmosphäre: Die im Vergleich zu den Trägheitskräften relativ hohen Reibungskräfte verursachen einen sofortigen Stopp durch Flüssigkeitsabriß.

Die Mindestabgabemenge im Dispensiermodus ist durch inhärente Oberflächenspannungen der Flüssigkeit bei einem Volumen von ca. 100 nL Grenzen gesetzt (hier beträgt die Abgabezeit unter Freistrahlbedingungen ca. 4 ms). Die Abgabe noch kleinerer Flüssigkeitsmengen ist hierbei insofern fraglich, als das die bei der Freistrahl-Geschwindigkeit von 1 bis 2 m/sec vorliegende kinetische Energie näherungsweise der Oberflächenenergie der Tropfen entspricht.

### 3. Einige vorteilhafte Wirkungen

Das Impulsdruckverfahren vermeidet undefinierte Tropfenbildung, da sich nach t₁ beim Druck p₂ sofort ein zusammenhängender Freistrahl formiert.

Durch plötzlichen Abbau des Über- bzw. Unterdruckes wird insbesondere mit einer fluidischen Übersetzung ein definierter Tropfenabriß beim Dispensieren erreicht.

Der Unter- bzw. Überdruckaufbau kann z.B. während eines Transport-, Aufnahme- oder Abgabevorganges erfolgen, insbesondere um eine Verzögerung weiterer Dosierungen zu vermeiden.

Durch den definierten Zeitbeginn t₁ der Aufnahme wird eine geringe Unpräzision erreicht.

Auch ist die Unrichtigkeit nicht mit dem Durchmesser der Austrittsöffnung des Flüssigkeitsreservoirs bzw. der Pipettenspitzen korreliert.

Das Aufnahme- bzw. das Abgabevolumen ist nur durch die Meßungenauigkeit begrenzt, insbesondere die Meßungenauigkeit des Drucksensors.

Die Aufnahme- bzw. Abgabegeschwindigkeit skalieren näherungsweise proportional zu der Viskosität und zum Druck.

Verschiedene Querschnitte der Austrittsöffnung der Düse (z.B. 100 bis 300 µm) sind für unterschiedliche Viskositäten einsetzbar. Unter gleichen Druckverhältnissen ist bei 10fach höherer Viskosität der Düsendurchmesser von 100 µm auf 180 µm zu vergrößern, bei 100fach höherer Viskosität von 100 µm auf 320 µm, wenn die Aufnahme- bzw. Abgabegeschwindigkeit konstant bleiben soll.

Mit einem Flüssigkeitsreservoir, das eine Düse mit bestimmten Abmessungen aufweist, sind verschiedene Flüssigkeit dosierbar, deren Viskosität sich um das 5 bis 10fache unterscheidet.

### 4. Weitere Ausführungsbeispiele

Fig. 5 zeigt eine Ausführung, bei der ein Flüssigkeitsreservoir 1 eine lösbare Verbindung 8 zu einem Verbindungskanal 6 eines Gasverdrängungssystems hat, auf den alternativ über ein 3/2-Wegeventil 4 ein Unterdruck-Gasreservoir 3 oder ein Überdruck-Gasreservoir 3' schaltbar ist. An das Gasreservoir 3 ist über einen Filter 9 eine unidirektionale Mikropumpe 2 mit der Saugseite angeschlossen, deren Druckseite zur Umgebung geführt ist. An das Gasreservoir 3' ist die Druckseite einer unidirektionalen Mikropumpe 2' angeschlossen, die über ein Filter 9' Umgebungsluft ansaugt.

Seitlich an den Verbindungskanal 6 ist ein Lüftungskanal 10 zur Umgebung angeschlossen, der mittels eines 2/2-Wegeventils 11 schließbar bzw. öffenbar ist.

Ebenfalls an den Verbindungskanal 6 seitlich angeschlossen ist ein Drucksensor 5, der den Differenzdruck zu Umgebung umfaßt.

Eine Dosiersteuerung 7 steuert die Mikropumpen 2, 2', die Ventile 4, 11 und verarbeitet das Signal des Drucksensors 5.

Dieses System arbeitet nach der geregelten Impulsdruckmethode. Zum Ansaugen von Flüssigkeit wird zunächst in Stellung b des Ventils 4 mittels der Mikropumpe 2 ein Unterdruck im Gasreservoir 3 aufgebaut. Dann wird bei geschlossenem Ventil 11 das Ventil 4 in Stellung a geschaltet, so daß schlagartig der Unterdruck an das Flüssigkeitsreservoir 1 angelegt wird, welches durch die Düse 1" Flüssigkeit ansaugt. Beim Ansaugen wird der Druck im Gasverdrängungssystem vom Drucksensor 5 laufend ermittelt und von der Dosiersteuerung 7 über die Mikropumpe 2 auf einen bestimmten Wert nachgeregelt. Das Ansaugen wird schlagartig beendet, indem das Ventil 11 geöffnet, die Mikropumpe 2 abgeschaltet und gegebenenfalls das Ventil 4 in Stellung b geschaltet wird.

Zum Abgeben von Flüssigkeit wird zunächst das Ventil 4 in Stellung a gebracht und mittels der Mikropumpe 2' ein Überdruck im Gasreservoir 3' aufgebaut. Der Überdruck wird impulsartig an das Flüssigkeitsreservoir 1 angelegt, indem bei geschlossenem Ventil 11 das Ventil 4 in Stellung b geschaltet wird. Hierdurch wird die aufgenommene Flüssigkeit im Freistrahl aus der Düse 1' abgegeben. Dabei wird der Überdruck laufend mittels des Drucksensors 5 ermittelt und von der Dosiersteuerung 7 auf einen bestimmten Wert geregelt. Nach Abgabe des gewünschten Flüssigkeitsvolumens wird wiederum das Ventil 11 geöffnet, die Mikropumpe 2' abgeschaltet und gegebenenfalls gleichzeitig das Ventil 4 in die Stellung a geschaltet, um den Überdruck zur Umgebung abzubauen.

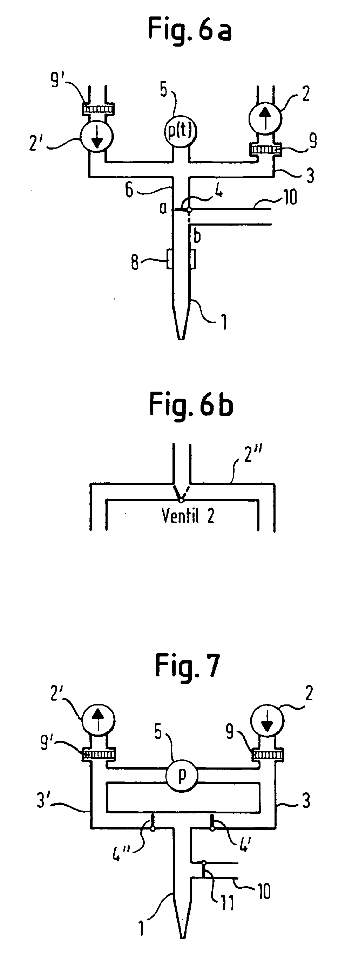

Die Ausführung von Fig. 6a hat in Abweichung zu der von Fig. 5 nur ein 3/2-Wegeventil 4, das im Verbindungskanal 6 an der Abzweigung des Lüftungskanals 10 sitzt. Die Pumpen 2, 2' sind an ein gemeinsames Gasreservoir 3 angeschlossen. Daran ist noch der Drucksensor 5 angeschlossen.

Wenn das Ventil 4 in Stellung a ist, kann das Gasreservoir 3 aufgeladen werden. Dafür haben die Pumpen 2, 2' die Eigenschaft, daß sie den von der jeweils anderen Pumpe 2', 2 im Gasreservoir 3 aufgebauten Druck halten. Der Druck im Gasreservoir 3 wird über den Drucksensor 5 und über eine Dosiersteuerung geregelt, die nicht dargestellt ist.

Für das Ansaugen oder Abgeben wird das Ventil 4 in Stellung b gebracht. Für das Beendigen des Ansaugens oder Abgebens wird es in Stellung a zurückgeschaltet.

Diese Ausführung hat wegen des Einsatzes nur einer Ventileinrichtung 4 einen verhältnismäßig geringen Aufwand. Der Aufwand könnte weiter dadurch reduziert werden, daß statt der Pumpen 2, 2' eine einzige, bidirektional arbeitende Pumpe 2 eingesetzt wird.

Falls für die Ausführung von Fig. 6a keine unidirektionalen Pumpen 2, 2' zur Verfügung stehen, die den Druck halten können, kann gemäß Fig. 6b dem Ausgang der Pumpe 2 und dem Eingang der Pumpe 2' eine Einrichtung 2" mit einem 3/2-Wegeventil vorgeschaltet werden. Je nach Schaltstellung des 3/2-Wegeventiles wird die Pumpe 2 oder 2' mit Umgebung verbunden und die andere gesperrt, wodurch das gewünschte Halten des Druckes sichergestellt ist.

Falls für die Ventileinrichtung 4 oder die Einrichtung 2" keine 3/2-Wegeventile zur Verfügung stehen, können diese auch durch jeweils zwei 2/2-Wegeventile ersetzt werden.

Die Ausführung von Fig. 7 unterscheidet sich von der von Fig. 5 dadurch, daß anstatt eines 3/2-Wegeventils 4 zwei 2/2-Wegeventile 4', 4" vorhanden sind. Außerdem ist ein Drucksensor 5 zwischen die Gasreservoire 3, 3' geschaltet.

Durch Schalten der Ventile 4', 4" und 11 kann der Unterdruck oder Überdruck auf das Flüssigkeitsreservoir 1 gegeben bzw. abgebaut werden. Mittels des Drucksensors 5 wird der Druck im jeweiligen Gasreservoir 3 oder 3' gemessen, wobei durch Lüftung des jeweils anderen Gasreservoirs 3', 3 über die angeschlossene Pumpe 2', 2 der Bezug auf Umgebungsdruck gegeben ist.

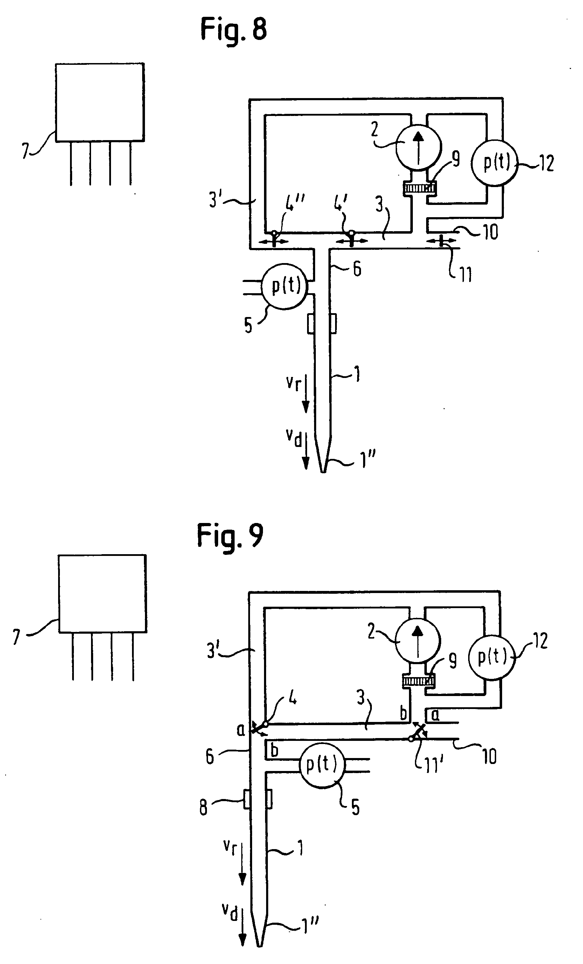

Die Ausführung von Fig. 8 unterscheidet sich von der Vorstehenden insbesondere durch die Ausbildung des Gasverdrängungssystems. Dieses weist eine einzige unidirektionale Mikropumpe 2 auf, die saugseitig über einen Filter 9 an ein Unterdruck-Gasreservoir 3 und druckseitig direkt an ein Überdruck-Gasreservoir 3' angeschlossen ist. Die Gasreservoire 3, 3' sind jeweils über ein 2/2-Wegeventil 4', 4" an einem Verbindungskanal 6 zum Flüssigkeitsreservoir 1 angeschlossen. An das Unterdruck-Gasreservoir 3 ist ein Lüftungskanal 10 angeschlossen, der wiederum ein 2/2-Wegeventil 11 aufweist. Mikropumpe 2 und Filter 9 sind von einem weiteren Differenzdrucksensor 12 überbrückt.

Die Mikropumpe 2, Ventile 4', 4", 11 und Sensoren 5, 12 sind an eine Dosiersteuerung 7 angeschlossen. Auf die Darstellung der Verbindungen wurde aus Vereinbarungsgründen verzichtet.

Ein Unterdruck wird durch Betätigen der Mikropumpe 1 im Gasreservoir 3 aufgebaut. Das Erreichen des gewünschten Unterdruckes kann mit dem Drucksensor 5 überwacht werden. Drucksensor 12 dient zur Erfassung der beim Differenzdruck gegebenen Pumprate. Durch Öffnen des Ventils 4' wird der Unterdruck schlagartig auf das Flüssigkeitsreservoir 1 geschaltet. Die Regelung des Unterdruckes erfolgt wie oben beschrieben. Für die Beendigung des Ansaugens wird das Ventil 11 geöffnet.

Beim Erzeugen des Unterdruckes kann bereits ein Überdruck im Gasreservoir 3' aufgebracht werden. Zudem ist dies durch Betreiben der Mikropumpe 1 bei geöffnetem Ventil 11 möglich. Mit dem Drucksensor 12 kann das Erreichen des gewünschten Überdruckes ermittelt werden. Der Überdruck kann schlagartig über das Ventil 4" auf das Flüssigkeitsreservoir 1 ausgeübt werden, um Flüssigkeit aus dem Flüssigkeitsreservoir 1 abzugeben. Die Regelung des Überdruckes erfolgt wie oben beschrieben. Die Flüssigkeitsabgabe wird durch Öffnen der Ventile 4', 11 beendet.

Die Ausführung von Fig. 9 unterscheidet sich von der Fig. 8 im wesentlichen durch die Ventile. Zwischen dem Unterdruck-Gasreservoir 3, dem Überdruck-Gasreservoir 3' und der Verbindung 6 zum Flüssigkeitsreservoir 1 befindet sich hier ein 3/2-Wegeventil 4. Auch ist ein 3/2-Wegeventil 11' zwischen dem Gasreservoir 3, dem Filter 9 und dem Lüftungskanal 10 angeordnet.

Unterdruck wird im Gasreservoir 3 aufgebaut, indem die Mikropumpe 1 bei Ventil 11' in Position a auf das durch Ventil 4 in Position b geschlossene Gasreservoir 3 wirkt. Der Unterdruck wird dann schlagartig auf das Flüssigkeitsreservoir 1 ausgeübt durch Umschalten des Ventils 4 in Stellung a. Zum Stoppen der Aufnahme wird das Ventil aus Position a und das Ventil 11' in Position b gebracht, so daß über die Pumpe 2 eine Belüftung erfolgen kann.

Zum Überdruck-Aufbau im Gasreservoir 3' wird das Ventil 11' in Stellung b geschaltet, das Ventil 4 in Stellung a gebracht und die Mikropumpe 1 betätigt. Zum Abgeben der Flüssigkeit wird das Ventil 4 in Stellung b geschaltet. Der Vorgang wird durch Öffnen des Ventils 11' zur Umgebung und ggfs. Schalten des Ventiles 4 in Stellung a beendigt.

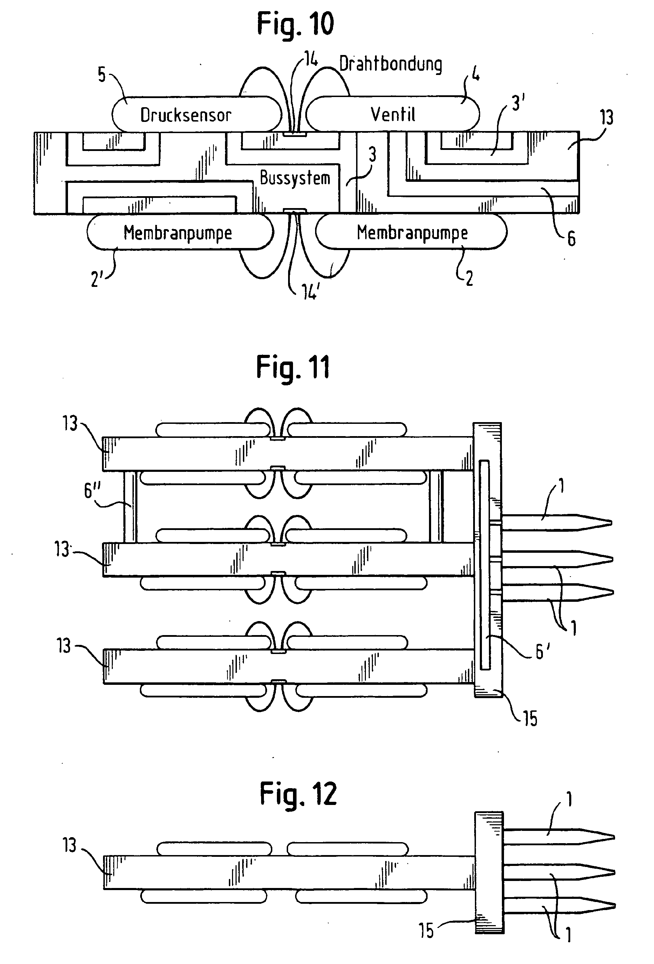

Ein erfindungsgemäßes System ist gemäß Fig. 10 vorteilhaft mittels eines Mikrofluidboards 13 realisierbar. In der Zeichnung ist dies für ein System gezeigt, dessen Aufbau etwa dem von Fig. 5 entspricht. Im Mikrofluidboard 13 sind die verschiedenen Kanäle (z.B. Verbindungskanal 6) und Gasreservoire (z.B. 3, 3') integriert. Sie sind in mindestens einem Plattenkörper durch Spritzgießen oder Prägetechnik und Deckelung hergestellt.

Auf dem Mikrofluidboard 13 werden die verschiedenen Komponenten (z.B. Mikromembranpumpen 2, 2', Ventil 4, Drucksensor 5) hybridmontiert und verschweißt, so daß sie mit den Kanälen (z.B. 6) oder Gasreservoiren (3, 3') im Mikrofluidboard 13 unmittelbar verbunden sind.

Auf den Oberflächen des Mikrofluidboards 14 befinden sich zudem elektrische Leiterbahnen 14, 14'. Die elektrischen/elektromechanischen Komponenten 2, 2', 4, 5 werden über ein Bondverfahren elektrisch mit den Leiterbahnen 14, 14' verbunden, so daß sie über ein normiertes Bussystem angesprochen werden können.

Über standardisierte elektrische und hydraulische Schnittstellen kann das Mikrofluidboard 13 an eine elektronische Drucksteuerung 7 und an eine Aufnahme- bzw. Befestigungseinrichtung für austauschbare Pipettenspitzen angeschlossen werden.

Ein Mikrofluidboard 13 hat insbesondere den Vorteil, daß es eine Minimierung der Totvolumina des Systems ermöglicht. Wenn der Unterdruck bzw. Überdruck bei Beaufschlagung des Flüssigkeitsreservoirs 1 nur um etwa die Hälfte abfallen soll, müssen nämlich die mit dem Gasreservoir 3 zu verbindenden Volumina des Systems etwa das gleiche Volumen wie das Gasreservoir 3 haben. Herkömmliche Schlauchverbindungen und klassisch-mechanische Pumpen und Ventile sind zu voluminös und träge. Deshalb ist die Ausführung mittels eines Mikrofluidboards 13 und mikrosystemtechnischen Komponenten besonders vorteilhaft.

Gemäß Fig. 11 können mehrere bestückte Mikrofluidboards 13 in einem normierten Rastermaß parallel nebeneinander angeordnet sein, um eine mehrkanalige Dispensiereinrichtung zu ermöglichen. Die Mikrofluidboards 13 sind mittels eines quergerichteten Verbindungsboards 15 mit Flüssigkeitsreservoiren 1 in Form von Pipettenspitzen verbunden. Das Verbindungsboard 15 umfaßt Fortsetzungen 6' der Verbindungskanäle 6, um den Anschluß zu den Flüssigkeitsreservoiren 1 herzustellen. Der Rasterabstand der Flüssigkeitsreservoire 1 kann ein anderer sein als der Rasterabstand der Mikrofluidboarde 13, um das Rastermaß von z.B. Titerplatten einzuhalten. Das Verbindungsboard 15 kann mit Aufnahme- und Befestigungseinrichtungen zur lösbaren Befestigung der Flüssigkeitsreservoire 1 bestückt sein.

Der modulare Aufbau eines Systems mittels Mikrofluidboards 13 bzw. Verbindungsboards 15 ermöglicht auch die Implementierung zusätzlicher Funktionen wie z.B. die Mischung oder Trennung einzelner Volumina in den Flüssigkeitsreservoiren 1. Hierfür kann das Verbindungsboard 15 gegebenenfalls zusätzliche intelligente Verteilungssysteme aufweisen, die beispielsweise Ventile haben können. Auch können zusätzliche pneumatische Verbindungen 6'' zwischen den verschiedenen Boards 13, 15 komplexere Verknüpfungen oder Funktionen ermöglichen.

Die Fig. 12 zeigt ein Mikrofluidboard 13, das über ein quergerichtetes Verbindungsboard 15 mit mehreren parallel angeordneten Flüssigkeitsreservoiren 1 verbinden ist. Die Aufnahme und Abgabe von Flüssigkeit durch die parallelen Flüssigkeitsreservoire 1 wird also durch ein einziges Mikrofluidboard 13 bewirkt. Dieses System kann Verbindungskanäle 6 im Mikrofluidboard 13 oder Fortsetzungen 6' derselben im Verbindungsboard 15 aufweisen, in die mikrosystemtechnische Ventileinrichtungen integriert sind. Über diese Ventileinrichtungen können gezielt einzelne oder mehrere Flüssigkeitsreservoire 1 ansteuerbar sein.

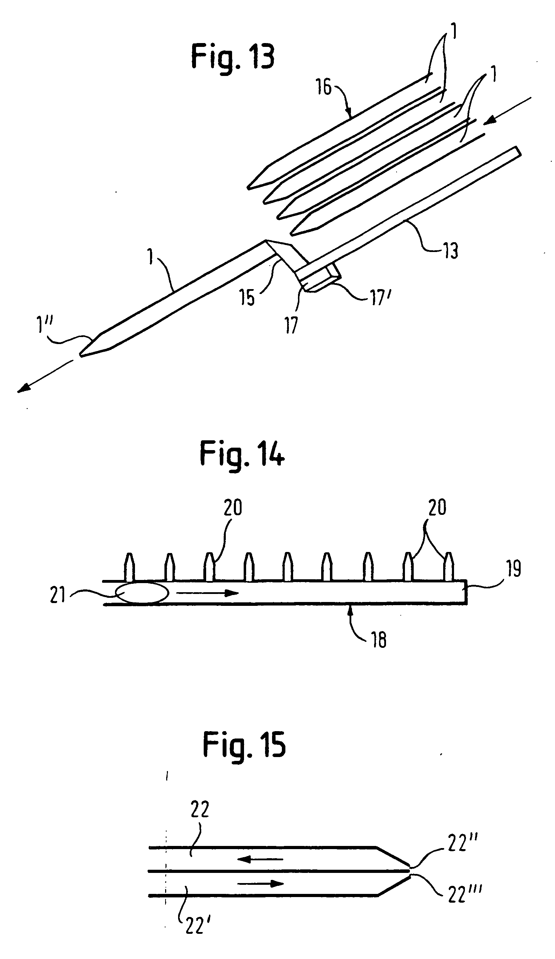

Gemäß Fig. 13 ist es möglich, die Flüssigkeitsreservoire 1 in Form von Pipettenspitzen aus einem Magazin 16 in paralleler Ausrichtung an das Mikrofluidboard 13 heranzuführen. Parallel zum Mikrofluidboard 13 sind die Pipettenspitzen 1 schließlich in eine Aufnahme verschiebbar. Das System kann eine LED 17 umfassen, die beispielsweise auf dem Mikrofluidboard 13 oder auf einem Verbindungsboard 15 montiert sein kann. Mittels der LED kann Licht - ggfs. über eine Strahlungsumlenkung - axial in einen als Bodenloch durchgeführten Gasdurchgang 1^{IV} der Pipettenspitze 1 eingekoppelt werden, um aus der Düse 1" als Lichtzeiger auszutreten. Die Pipettenspitze dient hierbei als Lichtleiter. Der Lichtzeiger kann als Positionsanzeige sowohl der Düse 1" (insbesondere bei Ausführung aus Glas) als auch des Dosierortes genutzt werden. Dies ist insbesondere bei Ausführung des Systemes als Handgerät von Vorteil. Des weiteren kann eine mit einem Lichtdetektor 17' gemessene Änderung im Reflexionsverhalten des Lichtes beim Berühren der Flüssigkeitsoberfläche für eine Flüssigkeitskontaktdetektion eingesetzt werden.

Gemäß Fig. 14 kann ein erfindungsgemäßes System an ein Verteilungssystem 18 angedockt werden. Dieses hat einen Zuführkanal 19, von dem eine Vielzahl n kleiner Seitenarme 20 abgeht. Die n Seitenarme 20 haben jeweils eine Düse mit einer Austrittsöffnung. Die Innenoberfläche des Verteilungssystems 18 ist im Bereich der Seitenarme 20 hydrophil ausgeführt, um ein Befüllen der Seitenarme mit Flüssigkeit zu unterstützen. Durch langsames Austreiben der aufgenommenen Flüssigkeit aus der Spitze unter Vermeidung eines Freistrahles im Kanal 19 ermöglicht dieses Verteilungssystem 18 die Flüssigkeitsverteilung in die Seitenarme 20. Mittels der erfindungsgemäßen Beaufschlagung mit Überdruck wird die Flüssigkeit sukzessiv aus den Düsen ggf. im Freistrahl abgegeben.

Gemäß Fig. 15 ist durch die parallele Anordnung zweier Flüssigkeitsreservoire 22, 22' sowohl eine Vermischung von zwei Flüssigkeiten als auch eine Trennung der aufzunehmenden Flüssigkeit mit Gasblasen möglich. Hierbei wird zum Vermischen aus dem Flüssigkeitsreservoir 22' eine zuvor darin aufgenommene Flüssigkeit abgegeben und zeitgleich mit einer weiteren Flüssigkeit in das Flüssigkeitsreservoir 22 aufgenommen. Da die komplette abgegebene Menge aus 22' von 22 aufgenommen werden soll, muß in 22 mindestens die gleiche Menge aufgenommen werden. In 22' kann anschließend eine dritte Flüssigkeit aufgenommen werden. Bei der Abgabe aus 22, 22' ist dann eine Mischung sämtlicher Flüssigkeiten erreichbar. Die Flüssigkeitsreservoire 22, 22' sind in dieser Anordnung mit ihren Austrittsöffnungen 22", 22"' möglichst dicht zueinander positioniert, um ein "Übersprechen" der Flüssigkeit zu begünstigen. Sie können zu einer Pipettenspitze vereinigt und als Disposable ausgeführt sein.

Eine weitere Anwendung der gleichen Flüssigkeitsreservoire 22, 22' ist die Trennung der gleichen Flüssigkeit im Kanal 22 durch Gasblasen, die beim Aufnehmen in durch Abgeben von Luft aus 22' bewirkt wird. Dieses kann insbesondere die Funktion eines Verteilungssystems in Fig. 14 begünstigen, wenn die einzelnen Flüssigkeitsmengen kleiner sind als die Teilvolumen in den Seitenarmen 20.

Als Mikropumpen können bei den vorstehenden Ausführungsbeispielen insbesondere Mikromembranpumpen zum Einsatz kommen. Diese können bei unidirektionaler Ausführung passive Ventile im Eingang und Ausgang aufweisen, beispielsweise Klappenventile. Bei bidirektionaler Ausführung können sie aktive Ventile im Eingang und Ausgang haben. Dabei kann es sich insbesondere um elektrisch steuerbare Ventile handeln, beispielsweise Membranventile mit einem Piezoaktuator.

Die Aktuatoren können von der Mikromembranpumpe getrennt ausgebildet oder in diese mikrosystemtechnisch integriert sein. Beispielsweise können die Membranen der Mikromembranpumpe bzw. des Membranventils eine Trägerschicht und eine darauf aufgebrachte Piezoschicht aufweisen. Über Flächenkontakte auf der Ober- und Unterseite der Piezoschicht wird eine elektrische Spannung an diesen Piezoaktuator angelegt.

Als unidirektionale Mikromembranpumpe kann insbesondere eine selbstfüllende Mikromembranpumpe des Institut für Mikrotechnik Mainz GmbH, Karl-Zeiss-Straße 18-20, D-55129 Mainz-Hechtsheim zur Anwendung kommen. Die betreffende Mikromembranpumpe ist vorgestellt worden in dem Fachaufsatz "A Self-filling low-cost membran micropump" von K. P. Kämper, J. Döpper, W. Ehrfeld, and S. Oberbeck in Proceedings of MEMS (Micro Electro Mechanical Systems), Heidelberg, 1998 p. 432-437. Bei dieser Mikromembranpumpe hat die Membran einen Durchmesser von etwa 10 mm.

Die folgenden Ausführungsbeispiele weisen eine Mikromembranpumpe mit einer oder mehreren Membranen mit integrierten Piezoaktuatoren (Membran-Piezobieger) auf. Der Membran-Piezobieger ist eine steife Doppel-Keramikmembran, die sich durch Anlegen einer Spannung kalottenförmig in einen Hohlraum hinein oder von diesem weg bewegt, je nachdem, wie die Spannung gepolt ist. Nach Abschalten der Spannung kehrt die Membran durch elastische Rückstellkräfte in ihre Ausgangslage zurück. Eine bekannte Mikromembranpumpe dieser Bauart unterscheidet sich von der obigen unidirektionalen Mikromembranpumpe insbesondere dadurch, daß ihre Membran einen Durchmesser von ca. 30 mm aufweist. Die Membran kann sich bezüglich eines ca. 70 µm tiefen Hohlraumes verformen. Außerdem zeichnet sie sich durch eine schnelle Verformung der Membran aus (z.B. im Sub-Millisekunden-Bereich).

Als Ventile können beispielsweise 2/2-Wegemikro-Piezoventile (aktive Komponente: 10 mm Membran-Piezobieger) des Forschungszentrums Karlsruhe/Fr. Bürkert verwendet werden.

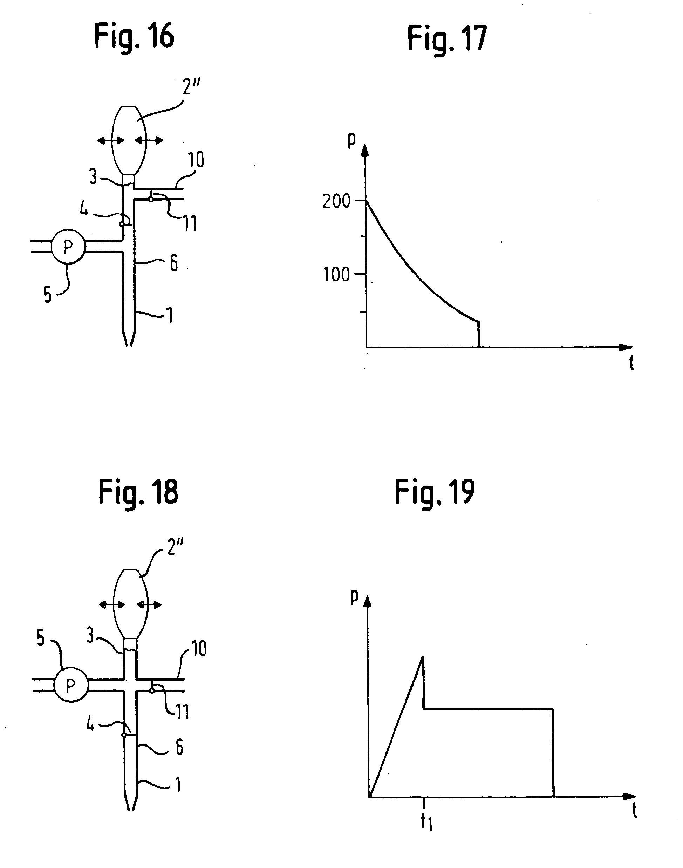

Gemäß Fig. 16 ist eine Mikromembranpumpe 2" der vorbeschriebenen Art über ein Gasreservoir 3 und einen Verbindungskanal 6 mit einem Flüssigkeitsreservoir 1 verbunden. Das Gasreservoir 3 kann auch teilweise oder vollständig in die Volumenverdrängungseinrichtung 2'' integriert sein. Das Flüssigkeitsreservoir 1 kann permanent oder lösbar mit dem Verbindungskanal 6 verbunden sein.

In dem Verbindungskanal 6 ist ein 2/2-Wegeventil 4 integriert. Ferner zeigt vom Verbindungskanal 6 ein Lüftungskanal 10 zur Umgebung ab, der mittels eines 2/2-Wegeventils 11 schließbar bzw. öffenbar ist. Zwischen Ventil 4 und Flüssigkeitsreservoir 1 ist an den Verbindungskanal 6 ein Drucksensor 5 angeschlossen, der den Differenzdruck zur Umgebung mißt.

Zum Ansaugen von Flüssigkeit wird zunächst Ventil 4 geschlossen und Ventil 11 geöffnet. Die beiden Membranen der Mikromembranpumpe 2" werden so angesteuert, daß sie sich zueinander biegen. Danach wird Ventil 11 geschlossen und die Mikromembranpumpe 2" so angesteuert, daß sich die Membranen entspannen oder auseinanderbiegen. Hierdurch wird im Gasreservoir 3 ein Unterdruck erzeugt.

Das Flüssigkeitsreservoir 1 wird mit einer Öffnung eine Flüssigkeit eingetaucht und das Ventil 4 schlagartig geöffnet. Infolgedessen wird durch den Unterdruck Flüssigkeit in das Flüssigkeitsreservoir 1 eingesaugt. Der Verlauf des Druckes p über der Zeit t ist aus der Fig. 17 ersichtlich. Beginnend mit dem maximalen Unterdruck p beim Öffnen des Ventils 4 sinkt der Druck im System ab. Dies wird mittels des Drucksensors 5 überwacht. Aus dem Druckverlauf wird über eine Gaszustandsgleichung das aufgenommene Flüssigkeitsvolumen errechnet. Sobald das Zielvolumen erreicht ist, wird das Ventil 11 geöffnet, so daß die Flüssigkeitsaufnahme stoppt. Durch Kapillarkräfte wird die Flüssigkeit im Flüssigkeitsreservoir 1 gehalten. Gegebenenfalls können die Membranen den Druckausgleich unterstützen, indem sie etwas zusammengebogen werden.

Zur Entspannung der Membranen können die Ventile 11, 4 geöffnet und die Spannung der Mikromembranpumpe 2" abgeschaltet werden. Für die Abgabe von Flüssigkeit ist es jedoch vorteilhaft, wenn die Membranen zu Beginn der Abgabe auseinandergebogen sind.

Für die Abgabe von Flüssigkeit werden die Ventile 4 und 11 geschlossen. Danach werden die Membranen zueinander gebogen, so daß im Gasreservoir 3 ein Überdruck entsteht. Für die Abgabe wird das Ventil 4 schlagartig geöffnet, so daß der Überdruck die Flüssigkeit aus dem Flüssigkeitsreservoir 1 austreibt. Der Druckverlauf bei der Flüssigkeitsabgabe wird mittels des Drucksensors 5 überwacht. Daraus wird wiederum das abgegebene Volumen errechnet und beim Erreichen des Zielvolumens das Ventil 11 schlagartig geöffnet. Anschließend können die Ventile 4 und 11 geöffnet werden, um die Membranen zu entspannen.

Über den Zeitverlauf des Druckausgleiches kann überdies die Viskosität der dosierten Flüssigkeit bestimmt werden.

Gemäß Fig. 18 ist im Unterschied zur Fig. 16 der Drucksensor 5 an das Gasreservoir 3 angeschlossen. Die Ansteuerung der Ventile beim Ansaugen und Abgeben erfolgt grundsätzlich wie bei Fig. 16. Bei dem Mikrodosiersystem von Fig. 16 wird jedoch der Druck im Gasreservoir auf einen annähernd konstanten Wert geregelt, indem die Mikromembranpumpe 2" betätigt und die Ventile 4, 11 angesteuert werden. Wenn nämlich beim Ansaugen bzw. Abgeben der Unterdruck bzw. Überdruck auf einen bestimmten Wert gefallen ist, wird das Ventil 4 geschlossen und das Ventil 11 geöffnet und werden die Membranen aufeinander zu gebogen bzw. voneinander weg gebogen. Anschließend wird das Ventil 11 geschlossen und werden die Membranen zur Erzeugung eines Unterdruckes auseinandergebogen bzw. zur Erzeugung eines Überdruckes zusammengebogen. Danach wird das Ventil 4 geöffnet und das Ansaugen bzw. Abgeben fortgesetzt. Dieser Vorgang wird so schnell ausgeführt, daß im Gasreservoir 3 ein annähernd konstanter Druck herrscht.

Dies wird durch Fig. 19 veranschaulicht. Demnach wird bei Aufnahme im Gasreservoir 3 bis zum Zeitpunkt t₁ ein Unterdruck p aufgebaut. Bei Öffnung des Ventils 4 sinkt dieser schlagartig auf einen reduzierten Wert. Im Beispiel wird aufgrund der Messung des Unterdruckes durch den Drucksensor 6 die Mikromembranpumpe 2" nachgeregelt, so daß der Unterdruck p während der gesamten Aufnahme der Flüssigkeit etwa konstant bleibt. Aufgrund der bekannten Volumenverdrängung der Mikromembranpumpe 2" kann das aufgenommene Flüssigkeitsvolumen ermittelt werden. Hierbei kann auch die Viskosität der aufgenommenen Flüssigkeit ermittelt werden.

Bei der Abgabe der Flüssigkeit ist analog eine Regelung des Abgabedruckes möglich, so daß über die bekannte Volumenverdrängung der Mikromembranpumpe 2" das abgegebene Flüssigkeitsvolumen ermittelt werden kann.

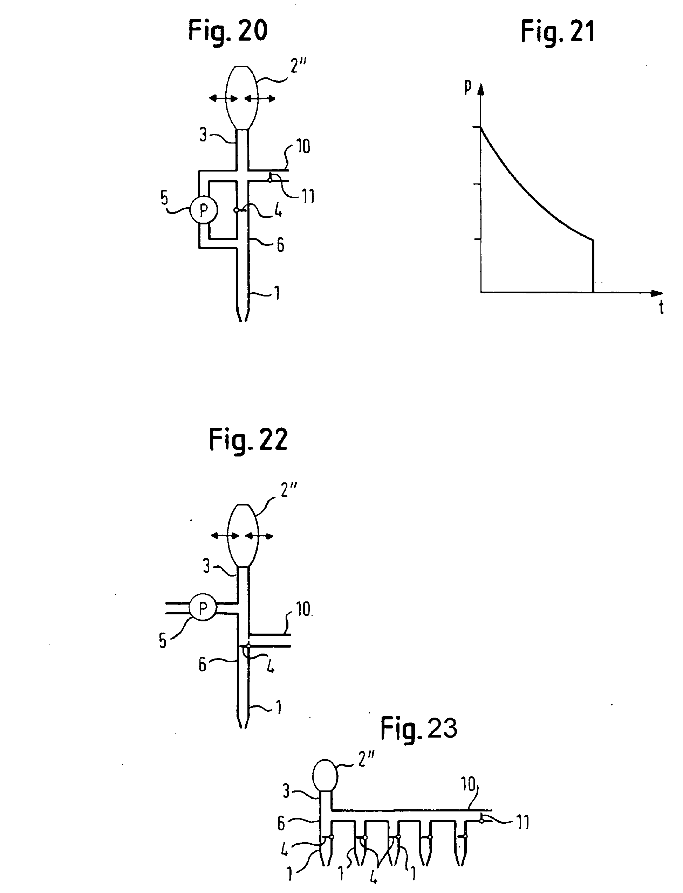

Fig. 20 unterscheidet sich von Fig. 16 und 18 dadurch, daß der Drucksensor 5 das Ventil 4 überbrückt. Das Volumen der aufgenommenen bzw. abgegebenen Flüssigkeit kann wie bei Fig. 16 erläutert, geregelt werden. Zusätzlich kann das Volumen des Flüssigkeitsreservoirs 1 aus der Entspannung des Druckes p (vgl. Fig. 21) in der Mikromembranpumpe 2" errechnet werden. Hierfür wird der Druck vor der Entspannung durch das zur Umgebung offene Flüssigkeitsreseryoir 1 gegen Umgebungsdruck gemessen. Ferner wird der Druck nach dem Öffnen des Ventils 11 und nach dem Eintauchen des Flüssigkeitsreservoirs 1 in Flüssigkeit gegen Umgebungsdruck gemessen.

Alternativ kann als Ersatz für den das Ventil 4 überbrückenden Sensor 5 jeweils ein Drucksensor am Flüssigkeitsreservoir 1 und in der Mikromembranpumpe 2" den Druck separat messen.

Fig. 22 unterscheidet sich von Fig. 18 dadurch, daß ein 3/2-Wegeventil 4 anstatt zweier 2/2-Wegeventile 4/11 vorhanden ist. Das 3/2-Wegeventil 4 kann sowohl den Durchgangskanal 6 als auch den Lüftungskanal 10 verschließen. Das Flüssigkeitsreservoir 1 steht hierbei nur in indirektem, über die Mikromembranpumpe 2" herzustellenden Kontakt zum Umgebungsdruck. Der sprunghafte Druckausgleich zum Umgebungsdruck erfolgt somit primär über entsprechend entgegengesetzte Steuerung der Membranen. Die Regelung des Volumens der Flüssigkeit erfolgt entsprechend Fig. 18. Der Drucksensor 5 kann auch entsprechend Fig. 16 an den Durchgangskanal 6 angesetzt werden, so daß die Regelung des Volumens dementsprechend erfolgt.

Gemäß Fig. 23 ist eine Mikromembranpumpe 2" über ein Gasreservoir 3 und parallele Verbindungskanäle 6 mit mehreren parallelen Flüssigkeitsreservoiren 1 verbunden. In den Verbindungskanälen 6 sind aktive Ventile 4 angeordnet. Außerdem zweigt vom Gasreservoir 3 ein Entlüftungskanal 10 ab, in dem ein aktives Ventil 11 angeordnet ist. Die Aufnahme und Abgabe von Flüssigkeit kann in Kenntnis der Pumprate der Mikromembranpumpe 2" ohne Drucksensor erfolgen. Darüber hinaus ist ein Betrieb entsprechend Fig. 16, 18 oder 20 möglich, wobei Drucksensoren 5 in entsprechender Anordnung zu ergänzen sind. Die Flüssigkeitsreservoire 1 können parallel oder einzeln benutzt werden.

## Patentansprüche

1. Gaspolster-Mikrodosiersystem zum Dosieren von Flüssigkeitsvolumina im Mikroliter- und Submikroliterbereich mit
1.1 einem Flüssigkeitsreservoir (1) mit einem Speicherraum (1') für die zu dosierende Flüssigkeit, dessen Begrenzung von einem nach außen führenden Flüssigkeitsdurchgang (1") und einem Gasdurchgang (1^{IV}) durchbrochen ist,
1.2 einem Gasverdrängungssystem mit einer Mikropumpe (2) zum Pumpen eines Gases und einer Verbindung (6) mit dem Gasdurchgang (1^{IV}), wobei das Gasverdrängungssystem Ventileinrichtungen (4) zum Öffnen oder Schließen der Verbindung (6) mit dem Gasdurchgang (1^{IV}) aufweist,
1.3 einer mit der Mikropumpe (2) und den Ventileinrichtungen (4) in Wirkverbindung stehenden Dosiersteuerung (7) zum Schließen der Ventileinrichtungen (4) und Erzeugen eines Unterdruckes oder Überdruckes durch Betätigen der Mikropumpe (2) und zum Beaufschlagen des Flüssigkeitsreservoirs (1) mit dem Unterdruck oder Überdruck durch Betätigen der Ventileinrichtungen (4), um Flüssigkeit durch den Flüssigkeitsdurchgang (1") in den Speicherraum (1') aufzunehmen oder aus diesem abzugeben, und
1.4 einem Drucksensor (5) zum Erfassen des Druckes im Gasverdrängungssystem, mit dem die Dosiersteuerung (7) in Wirkverbindung steht, um das aufgenommene oder abgegebene Flüssigkeitsvolumen zu ermitteln oder auf einen vorgegebenen Wert zu steuern.

2. System nach Anspruch 1, bei dem das Gasverdrängungssystem ein an die Mikropumpe (2) angeschlossenes Gasreservoir (3) aufweist.

3. System nach Anspruch 1 oder 2, bei dem die Dosiersteuerung (7) eingerichtet ist den Unterdruck oder Überdruck im Gasverdrängungssystem beim Ansaugen oder Abgeben von Flüssigkeit durch Erfassen des darin herrschenden Druckes mittels des Drucksensors (5) und Steuern der Pumprate oder Volumenverdrängung der Mikropumpe (2) auf einen vorgegebenen Wert oder Werteverlauf zu regeln und das aufgenommene oder abgegebene Flüssigkeitsvolumen über die Pumprate oder Volumenverdrängung der Mikropumpe (2) zu ermitteln oder auf einen vorgegebenen Wert zu steuern.

4. System nach Anspruch 3, bei dem die Dosiersteuerung (7) eingerichtet ist das aufgenommene oder abgegebene Flüssigkeitsvolumen über die Integration der Pumprate der Mikropumpe (2) über die Zeit zu ermitteln oder zu steuern.

5. System nach Anspruch 3 oder 4, bei dem die Dosiersteuerung (7) eingerichtet ist Daten über eine Druckabhängigkeit der Pumprate der Mikropumpe (2) zu ermitteln und/oder zu berücksichtigen.

6. System nach Anspruch 1, bei dem die Dosiersteuerung (7) eingerichtet ist den Unterdruck oder Überdruck im Gasverdrängungssystem beim Ansaugen oder Abgeben von Flüssigkeit mittels des Drucksensors (5) zu erfaßen und das ausgenommene oder abgegebene Flüssigkeitsvolumen unter Zuhilfenahme einer Gaszustandsgleichung zu ermitteln oder auf einen vorgegebenen Wert zu steuern.

7. System nach einem der Ansprüche 1 oder 6, bei dem die Dosiersteuerung (7) eingerichtet ist zum Aufnehmen oder Abgeben von Flüssigkeiten unterschiedlicher Viskosität die Mikropumpe (2) unterschiedlich zu betätigen, um im Gasverdrängungssystem unterschiedliche Unterdrucke oder Überdrucke zu erzeugen.

8. System nach einem der Ansprüche 1 bis 7, bei dem die Dosiersteuerung (7) eingerichtet ist die Viskosität der Dosierflüssigkeit über das Zeitverhalten der Regelung des Unter- oder Überdruckes zu ermitteln.

9. System nach einem der Ansprüche 1 bis 8, bei dem die Dosiersteuerung (7) eingerichtet ist die Abgabe eines Flüssigkeitsvolumens durch Betätigen der Mikropumpe (2) aufgrund von Daten über den zeitlichen Verlauf der Aufnahme eines bestimmten Flüssigkeitsvolumens über die Zeit auf einen vorgegebenen Wert zu steuern.

10. System nach einem der Ansprüche 1 bis 9, das weitere Ventileinrichtungen (11) zum Öffnen oder Schließen einer Lüftungsverbindung (10) des Gasverdrängungssystems zur Umgebung aufweist und bei dem die Dosiersteuerung (7) mit den weiteren Ventileinrichtungen (11) in Wirkverbindung steht, um das Aufnehmen oder Abgeben von Flüssigkeit durch Abbau des Unterdruckes oder Überdruckes unter Öffnen der Lüftungsverbindung (10) zur Umgebung mittels der weiteren Ventileinrichtungen (11) zu stoppen.

11. System nach einem der Ansprüche 1 bis 10, bei dem der Querschnitt des Flüssigkeitsdurchganges (1") oder dessen Verlauf so bemessen ist und die Dosiersteuerung (7) eingerichtet ist den Überdruck durch Betätigen der Mikropumpe (2) so zu steuern, daß die Flüssigkeit im Flüssigkeitsdurchgang (1") eine genügend große Geschwindigkeit erreicht, um als Freistrahl nach außen zu treten.

12. System nach einem der Ansprüche 1 bis 11, bei dem der Querschnitt des Flüssigkeitsdurchganges (1") und/oder des Speicherraumes (1') so bemessen ist, daß bei Abbau des Unterdruckes oder Überdruckes die Reibungskräfte die Trägheitskräfte der bewegten Flüssigkeit überwiegen, um die weitere Aufnahme oder Abgabe von Flüssigkeit zu unterdrücken.

13. System nach einem der Ansprüche 1 bis 12, bei dem der Flüssigkeitsdurchgang (1") als Düse ausgebildet ist.

14. System nach einem der Ansprüche 1 bis 13, bei dem die Dosiersteuerung (7) eingerichtet ist beim Abbau des Unterdruckes oder Überdruckes eine mit dem Gasverdrängungssystem verbundene Mikropumpe (2) und/oder eine Ventileinrichtung in einer Verbindung zu einem Gasreservoir so zu steuern, daß ein den Trägheitskräften entgegenwirkender Über- oder Unterdruck aufgebracht wird.

15. System nach einem der Ansprüche 1 bis 14, bei dem der Querschnitt des Speicherraumes (1') oder dessen Verlauf so bemessen ist und die Dosiersteuerung (7) eingerichtet ist den Überdruck durch Betätigen der Mikropumpe (2) so zu steuern, daß die Flüssigkeit im Speicherraum (1') einen Wert der Geschwindigkeit nicht überschreitet, der zu einer Strömungsablösung im Speicherraum (1') und zu einem Verbleib von Restflüssigkeit an der Wandung des Speicherraumes (1') führt.

16. System nach einem der Ansprüche 1 bis 15, bei dem die Dosiersteuerung (7) eingerichtet ist durch Betätigen der Ventileinrichtungen (4) und/oder Betätigen der Mikropumpe (2) einen Gasaustritt aus dem Flüssigkeitsdurchgang (1") zu bewirken und ein Eintauchen in eine Flüssigkeit anhand einer Änderung des vom Drucksensor (5) erfaßten Druckes zu identifizieren.

17. System nach Anspruch 16, bei dem die Dosiersteuerung (7) eingerichtet ist aufgrund eines identifizierten Eintauchvorganges automatisch die Aufnahme von Flüssigkeit in das Flüssigkeitsreservoir (1) aus zu lösen.

18. System nach einem der Ansprüche 1 bis 17, bei dem das Flüssigkeitsreservoir (1) innen und/oder außen bezüglich der jeweils zu dosierenden Flüssigkeit flüssigkeitsabweisende Oberflächeneigenschaften hat.

19. System nach einem der Ansprüche 1 bis 18, bei dem das Flüssigkeitsreservoir (1) eine Pipettenspitze ist.

20. System nach einem der Ansprüche 1 bis 19, bei dem das Flüssigkeitsreservoir (1) aus Glas und/oder Kunststoff ist.

21. System nach einem der Ansprüche 1 bis 20, bei dem das Flüssigkeitsreservoir (1) lösbar mit der Verbindung (6) verbunden ist.

22. System nach einem der Ansprüche 1 bis 21, bei dem das Flüssigkeitsreservoir (1) ein Einmalartikel ist.

23. System nach einem der Ansprüche 1 bis 22, das eine Mikropumpe (2) aufweist, deren Eingang über ein Unterdruck-Gasreservoir (3) und die Ventileinrichtungen (4) mit der Verbindung (6) verbunden ist und das eine weitere Mikropumpe (2') aufweist, die über ein Überdruck-Gasreservoir (3') und die Ventileinrichtungen (4) mit der Verbindung (6) verbunden ist.

24. System nach einem der Ansprüche 1 bis 23, das eine Mikropumpe (2) aufweist, deren Eingang über ein Unterdruck-Gasreservoir (3) und Ventileinrichhmgen (4') mit der Verbindung (6) verbunden ist und deren Ausgang über ein Überdruck-Gasreservoir (3') und Ventileinrichtungen (4") mit der Verbindung (6) verbunden ist.

25. System nach einem der Ansprüche 1 bis 24, das eine mindestens bidirektional pumpfähige Mikropumpe (1) und/oder mindestens eine unidirektional pumpfähige Mikropumpe (1, 1') aufweist.

26. System nach einem der Ansprüche 1 bis 25, bei dem mindestens eine Mikropumpe (2) eine Mikromembranpumpe ist.

27. System nach Anspruch 26, bei dem die Mikromembranpumpe (2) ventillos ist oder passive oder aktive Ventile aufweist.

28. System nach Anspruch 27, bei dem die aktiven Ventile der Mikromembranpumpe (2") Ventileinrichtungen (4, 11) in der Verbindung (6) und/oder in einer Entlüftung (10) sind.

29. System nach einem der Ansprüche 26 bis 28, bei dem die Mikromembranpumpe (2") und/oder die aktiven Ventile (4, 11) mindestens eine Membran mit einem integrierten Piezoaktuator hat/haben.

30. System nach einem der Ansprüche 1 bis 29, bei dem die Mikropumpe (2) von einem Differenzdrucksensor (13) überbrückt ist.

31. System nach einem der Ansprüche 1 bis 30, bei dem die Mikropumpe (2) eingerichtet ist das Gas durch einen Filter (9) zu fördern.

32. System nach einem der Ansprüche 1 bis 31, bei dem mehrere Mikropumpen (2) hintereinander in Reihe geschaltet und/oder mehrere Mikropumpen (2) nebeneinander parallel geschaltet sind.

33. System nach dem Anspruch 10, bei dem die Lüftungsverbindung (10) von der Verbindung (6) oder vom Gasreservoir (3) abzweigt.

34. System nach dem Anspruch 10, bei dem die Verbindung (6) ein Verbindungskanal und/oder die Lüftungsverbindung (10) ein Lüftungskanal ist.

35. System nach einem der Ansprüche 1 bis 34, bei dem die Verbindung (6) höchstens den gleichen Strömungswiderstand für das Gas wie eine Düse (1") des Flüssigkeitsreservoirs (1) für die Flüssigkeit hat.

36. System nach einem der Ansprüche 1 bis 35, bei dem die Mikropumpe (2) und/oder die Ventileinrichtungen (4) und/oder die weiteren Ventileinrichtungen passive und/oder aktive (11) Klappenventile aufweiset.

37. System nach einem der Ansprüche 1 bis 36, bei dem der Drucksensor (12) eingerichtet ist den Druck in der Verbindung (6) zu ermitteln.

38. System nach einem der Ansprüche 1 bis 37, bei dem die Mikropumpe (2) und/oder die Ventileinrichtungen (4) und/oder die weiteren Ventileinrichtungen (11) und/oder der Drucksensor (12) und/oder das Gasreservoir (3) und/oder die Verbindung (6) und/oder die Lüftungsverbindung (10) und/oder das Flüssigkeitsreservoir (2) und/oder die Dosiersteuerung (7) auf einem Mikrofluidplattenkörper (13) angeordnet sind.

39. System nach Anspruch 38, bei der Mikrofluidplattenkörper (13) mit einem Verbindungsplattenkörper (15) verbunden ist.

40. System nach einem der Ansprüche 1 bis 39, bei dem mehrere Gasverdrängungssysteme parallel angeordnet und mit mindestens einem Flüssigkeitsreservoir (2) verbunden sind und/oder bei dem mehrere Flüssigkeitsreservoire (1) parallel angeordnet sind und mit mindestens einem Gasverdrängungssystem verbunden sind.

41. System nach einem der Ansprüche 40, bei dem das Flüssigkeitsreservoir ein Verteilungssystem (18) für Flüssigkeit mit einem Zuführkanal (19) und mehreren davon abgehenden Seitenarmen (20) aufweist.

42. System nach Anspruch 40 oder 41, das benachbarte Flüssigkeitsreservoire (22, 22') mit benachbarten Austrittsöffnungen (22", 22"') und mindestens ein den Flüssigkeitsreservoiren (22, 22')zugeordnetes Gasverdrängungssystem mit mindestens einer Dosiersteuerung (7) aufweist.

43. System nach Anspruch 42, bei dem die Dosiersteuerung (7) eingerichtet ist das gleichzeitige Abgeben eines Fluids aus einem Flüssigkeitsreservoir (22') und Aufnehmen eines Fluids in das andere Flüssigkeitsreservoir (22) und/oder das gleichzeitige Abgeben eines Fluids aus beiden Flüssigkeitsreservoiren (22, 22') zu steuern.

44. System nach einem der Ansprüche 1 bis 43, ausgeführt als Handgerät oder stationäres Gerät.

45. System nach einem der Ansprüche 1 bis 44, das einen parallel oder koaxial zum Flüssigkeitsdurchgang (1 ") ausgerichteten Lichtstrahl aus einer LED aufweist.

46. System nach Anspruch 45, das eine über eine Lichtweg mit dem Flüssigkeitsreservoir (1) verbundenen Lichtsensor (17') zum Detektieren einer Flüssigkeitsberührung des Flüssigkeitsreservoirs (1) aufweist.

47. System nach einem der Ansprüche 1 bis 46, das ein Magazin und Zuführ- und/oder Abwurfeinrichtungen für austauschbare Flüssigkeitsreservoire (1) aufweist.

48. Merkaual-Gaspolster-Mikrodosiersystem bestehend aus mehreren parallelen Systemen nach einem der Ansprüche 1 bis 47.

49. System nach Anspruch 48, bei dem der Abstand benachbarter Flüssigkeitsdurchgänge (1") dem Abstand benachbarter Aufnahmen einer Mikrotiterplatte entspricht.

## Claims

1. A gas cushion proportioning microsystem to proportion liquid volumes in the microlitre and sub-microlitre range, comprising:
1.1 a liquid reservoir (1) including a storage space (1') for the liquid being proportioned the boundary line of which is broken through by an outwardly leading liquid passage (1") and a gas passage (1^{IV}),
1.2 a gas displacement system which has a micropump (2) to pump a gas and a connection (6) to the gas passage (1^{IV}), the gas displacement system having valve means (4) to open and close the connection (6) with the gas passage (1^{IV}),
1.3 a proportioning control (7) disposed in an operative communication with the micropump (2) and the valve means (4) to close the valve means (4) and generate a negative pressure or positive pressure by actuating the micropump (2) and to apply the negative pressure or positive pressure to the liquid reservoir (1) by actuating the valve means (4) in order to receive liquid in the storage space (1') through the liquid passage (1") or to deliver it from said space, and
1.4 a pressure sensor (5) to detect the pressure in the gas displacement system with which the proportioning control (7) is in an operative communication in order to determine the liquid volume received or discharged or to control it to a preset value.

2. The system according to claim 1 in which the gas displacement system has a gas reservoir (3) which is connected to the micropump (2).

3. The system according to claim 1 or 2 wherein the proportioning control (7) is arranged to regulate the negative pressure or positive pressure in the gas displacement system in drawing in or dispensing liquid by detecting the pressure prevailing therein by means of the pressure sensor (5) and controlling the pumping rate or the volume displaced by the micropump (2) to a preset value or course of values, and to determine the liquid volume received or discharged via the pumping rate or the volume displaced by the micropump (2) or to control it to a preset value.

4. The system according to claim 3 wherein the proportioning control (7) is arranged to determine or to control the liquid volume received or discharged via an integration of the pumping rate of the micropump (2) in time.

5. The system according to claim 3 or 4 wherein the proportioning control (7) is arranged to determine and/or to take account of data on the pressure dependence of the pumping rate of the micropump (2).

6. The system according to claim 1 wherein the proportioning control (7) is arranged to detect the negative pressure or positive pressure in the gas displacement system in drawing in or dispensing liquid by means of the pressure sensor (5) and to determine the liquid volume received or discharged by resorting to a gas condition equation, or to control it to a preset value.

7. The system according to any one of claims 1 or 6 wherein the proportioning control (7) for receiving or dispensing liquids of differing viscosities is arranged to actuate the micropump (2) differently in order to generate different negative pressures or positive pressures in the gas displacement system.

8. The system according to any one of claims 1 to 7 wherein the proportioning control (7) is arranged to determine the viscosity of the liquid being proportioned via the time response of the control of the negative or positive pressure.

9. The system according to any one of claims 1 to 8 wherein the proportioning control (7) is arranged to control the discharge of a liquid volume to a preset value by actuating the micropump (2) on the basis of data on the timed course of reception of a determined liquid volume in time.

10. The system according to any one of claims 1 to 9 which includes further valve means (11) to open or close a ventilation connection (10) of the gas displacement system to the environment and wherein the proportioning control (7) is in an operative communication with the further valve means (11) in order to stop the reception or discharge of liquid by relieving the negative pressure or positive pressure by means of the further valve means (11) while opening the ventilation connection (10) to the environment by means of the further valve means (11).

11. The system according to any one of claims 1 to 10 wherein the cross-section of the liquid passage (1") or the path of which is dimensioned such and the proportioning control (7) is arranged to control the positive pressure in the gas reservoir (3) by actuating the micropump (2) in such a way that the liquid in the liquid passage (1") reaches a speed which is large enough to cause it to exit to the outside in an open jet.

12. The system according to any of claims 1 to 11 wherein the cross-section of the liquid passage (1") and/or the storage space (1') is dimensioned such that if the negative pressure or positive pressure is relieved the frictional forces outweigh the inertia forces of the moved liquid in order to suppress any further reception or discharge of liquid.

13. The system according to any one of claims 1 to 12 wherein the liquid passage (1") is configured as a nozzle.

14. The system according to any of claims 1 to 13 wherein the proportioning control (7), if the negative pressure or positive pressure is relieved, is arranged to control a micropump (2) connected to the gas displacement system and/or a valve means in a communication with a gas reservoir in such a way that a negative or positive pressure counteracting the inertia forces is applied.

15. The system according to any of claims 1 to 14 wherein the cross-section of the liquid space (1') or the path of which is dimensioned such and the proportioning control (7) is arranged to control the positive pressure in the gas reservoir (3) by actuating the micropump (2) in such a way that the liquid in the liquid space (1') does not exceed a value of speed which would lead to a flow separation in the storage space (1') and to a stay of residual liquid on the wall of the storage space (1').

16. The system according to any of claims 1 to 15 wherein the proportioning control (7) is arranged to cause gas to exit from the liquid passage (1") by actuating the valve means (4) and/or actuating the micropump (2) and to identifiy an immersion into a liquid by way of a change of the pressure detected by the pressure sensor (5).

17. The system according to claim 16 wherein the proportioning control (7) is arranged to automatically initiate the reception of liquid in the liquid reservoir (1) because of an identified dipping operation.

18. The system according to any one of claims 1 to 17 wherein the liquid reservoir (1) has liquid-repellent surface characteristics at the inside and/or outside in regard of the respective liquid being proportioned.

19. The system according to any one of claims 1 to 18 wherein the liquid reservoir (1) is a pipette tip.

20. The system according to any one of claims 1 to 19 wherein the liquid reservoir (1) is made of glass and/or plastic.

21. The system according to any one of claims 1 to 20 wherein the liquid reservoir (1) is disconnectably joined to the connection (6) with the gas reservoir (3).

22. The system according to any one of claims 1 to 21 wherein the liquid reservoir (1) is a disposable.

23. The system according to any one of claims 1 to 22 which includes a micropump (2) the inlet of which is joined to the connection (6) via a negative-pressure gas reservoir (3) and the valve means (4) and which includes another micropump (2') which is joined to the connection (6) via a positive-pressure gas reservoir (3') and the valve means (4).

24. The system according to any one of claims 1 to 23 which includes a micropump (2) the inlet of which is joined to the connection (6) via a negative-pressure gas reservoir (3) and valve means (4') and the exit of which is joined to the connection (6) via a positive-pressure gas reservoir (3') and valve means (4").

25. The system according to any one of claims 1 to 24 which includes one micropump (1) adapted to pump at least bidirectionally and/or at least one micropump (1, 1') adapted to pump unidirectionally.

26. The system according to any one of claims 1 to 25 wherein at least one micropump (2) is a membrane micropump.

27. The system according to claim 26 wherein the membrane micropump (2) is with no valve or has passive-response or active-response valves.

28. The system according to claim 27 wherein the active-response valves of the membrane micropump (2") are valve means (4, 11) in the connection (6) and/or in an ventilation connection (10).

29. The system according to any one of claims 26 to 28 wherein the membrane micropump (2") and/or the active-response valves (4, 11) has/have at least one membrane with an integrated piezoelectric actuator.

30. The system according to any one of claims 1 to 29 wherein the micropump (2) is bridged by a differential pressure sensor (13).

31. The system according to any one of claims 1 to 30 wherein the micropump (2) is arranged to deliver the gas through a filter (9).

32. The system according to any one of claims 1 to 31 wherein several micropumps (2) are connected in series one behind the other and/or several micropumps (2) are connected in parallel side by side.

33. The system according to claim 10 wherein the ventilation connection (10) is branched off from the connection (6) or the gas reservoir (3).

34. The system according to claim 10 wherein the connection (6) is a connection channel and/or the ventilation connection (10) is a ventilation channel.

35. The system according to any one of claims 1 to 34 wherein the connection (6) at the most has the same flow resistance for the gas as the nozzle (1") of the liquid reservoir (1) has for the liquid.

36. The system according to any one of claims 1 to 35 wherein the micropump (2) and/or the valve means (4) and/or the further valve means have passive-response and/or active-response (11) flap valves.

37. The system according to any one of claims 1 to 36 wherein the pressure sensor (12) is arranged to determine the pressure in the connection (6).

38. The system according to any one of claims 1 to 37 wherein the micropump (2) and/or the valve means (4) and/or the further valve means (11) and/or the pressure sensor (12) and/or the gas reservoir (3) and/or the connection (6) and/or the ventilation connection (10) and/or the liquid reservoir (2) and/or the proportioning control (7) are disposed on a microfluid board (13).

39. The system according to claim 38 wherein at least one microfluid board (13) is joined to a connection board (15).

40. The system according to any one of claims 1 to 39 wherein several gas displacement systems are disposed in parallel and are connected to at least one liquid reservoir (2) and/or wherein several liquid reservoirs (1) are disposed in parallel and are connected to at least one gas displacement system.

41. The system according to claim 40 wherein the liquid reservoir has a distribution system (18) for liquid including a feed channel (19) and several side arms (20) which are branched off therefrom.

42. The system according to claim 40 or 41 which has adjoining liquid reservoirs (22, 22') with adjoining outlets (22", 22"') and at least one gas displacement system associated with the liquid reservoirs (22, 22') with at least one proportioning control (7).

43. The system according to claim 42 wherein the proportioning control (7) is arranged to control the simultaneous discharge of a fluid from one liquid reservoir (22') and the reception of a fluid in the other liquid reservoir (22) and/or the simultaneous discharge of a fluid from the two liquid reservoirs (22, 22').

44. The system according to any one of claims 1 to 43 which is designed as a portable unit or stationary unit.

45. The system according to any one of claims 1 to 44 which has a light beam from an LED aligned in parallel or coaxially with the liquid passage (1 ").

46. The system according to claim 45 which has a light sensor (17') connected to the liquid reservoir (1) via an optical path to detect a liquid contact of the liquid reservoir (1).

47. The system according to any one of claims 1 to 46 which has a magazine and feeding and/or dropping means for exchangeable liquid reservoirs (1).

48. A multi-channel air cushion proportioning microsystem, comprising several parallel systems according to any one of claims 1 to 47.

49. The system according to claim 48 wherein the spacing between adjoining liquid passages (1") corresponds to the spacing between adjoining mountings of a microtitration plate.

## Revendications

1. Système microdoseur à coussin de gaz pour doser des volumes de liquide dans l'échelle de microlitres et sous-microlitres, avec
1.1 un réservoir de liquide (1) avec une chambre de retenue (1') pour le liquide à doser, dont les bords sont interrompus par un passage de liquide menant à l'extérieur (1") et par un passage de gaz (1^{IV}),
1.2 un système de déplacement de gaz avec une micro-pompe (2) pour pomper un gaz et avec un raccord (6) avec le passage de gaz (1^{IV}), le système de déplacement de gaz ayant des dispositifs de soupape (4) pour ouvrir ou fermer le raccord (6) avec le passage de gaz (1^{IV}),
1.3 un réglage de dosage (7) étant en connexion active avec la micro-pompe (2) et les dispositifs de soupape (4) pour fermer les dispositifs de soupape (4) et pour générer une pression négative ou positive en actionnant la micro-pompe (2), et pour alimenter le réservoir de liquide (1) avec la pression négative ou positive en actionnant les dispositifs de soupape (4) afin de ramasser du liquide dans la chambre de retenue (1') ou de le décharger de celle-ci à travers du passage de liquide (1"), et
1.4 un capteur de pression (5) pour enregistrer la pression dans le système de déplacement de gaz, avec lequel le réglage de dosage (7) est en connexion active afin de détecter le volume de liquide ramassé ou déchargé, ou de le régler à une valeur prédéterminée.

2. Système selon la revendication 1, dans lequel le système de déplacement de gaz présente un réservoir de gaz raccordé à la micro-pompe (2).

3. Système selon la revendication 1 ou 2, dans lequel le réglage de dosage (7) est adapté à régler la pression négative ou positive dans le système de déplacement de gaz dans l'aspiration ou décharge de liquide à une valeur ou course de valeurs prédéterminée, en enregistrant la pression qui existe en cela au travers du capteur de pression (5) et en régulant le débit de pompe ou déplacement de volume de la micro-pompe (2), et à déterminer le volume de liquide ramassé ou déchargé par le débit de pompe ou déplacement de volume de la micro-pompe (2), ou à le régler à une valeur prédéterminée.

4. Système selon la revendication 3, dans lequel le réglage de dosage (7) est adapté à déterminer ou réguler le volume de liquide ramassé ou déchargé par l'intégration du débit de pompe de la micro-pompe (2) sur le temps.

5. Système selon la revendication 3 ou 4, dans lequel le réglage de dosage (7) est adapté à déterminer ou prendre en compte des données concernant une dépendance du débit de pompe de la micro-pompe (2) de la pression.

6. Système selon la revendication 1, dans lequel le réglage de dosage (7) est adapté à enregistrer la pression négative ou positive dans le système de déplacement de gaz dans l'aspiration ou décharge de liquide au travers du capteur de pression (5), et à déterminer le volume de liquide ramassé ou déchargé ou à le régler à une valeur prédéterminée à l'aide d'une équation d'état de gaz.

7. Système selon une des revendications 1 ou 6, dans lequel le réglage de dosage (7) est adapté à actionner la micro-pompe (2) de façon variable pour ramasser ou décharger des liquides avec des viscosités différentes, afin de générer des pressions négatives ou positives différentes dans le système de déplacement de gaz.

8. Système selon l'une quelconque des revendications 1 à 7, dans lequel le réglage de dosage (7) est adapté à déterminer la viscosité du liquide à doser au travers de la fonction de transfert de la régulation de la pression négative ou positive.

9. Système selon l'une quelconque des revendications 1 à 8, dans lequel le réglage de dosage (7) est adapté à régler la décharge d'un volume de liquide par actionnement de la micro-pompe (2) à une valeur prédéterminée, sur la base de données concernant la courbe de temps du ramassage d'un certain volume de liquide sur le temps.

10. Système selon l'une quelconque des revendications 1 à 9, qui présente encore d'autres dispositifs de soupape (11) pour ouvrir ou fermer une connexion de ventilation (10) du système de déplacement de gaz envers les environs, et dans lequel le réglage de dosage (7) est en connexion active avec les autres dispositifs de soupape (11) afin de stopper le ramassage ou la décharge de liquide par réduction de la pression négative ou positive en ouvrant la connexion de ventilation (10) envers les environs au travers des autres dispositifs de soupape (11).

11. Système selon l'une quelconque des revendications 1 à 10, dans lequel la section transversale du passage de liquide (1") ou en la course est tellement dimensionnée et le réglage de dosage (7) est adapté à réguler la pression positive par actionnement de la micro-pompe (2) tellement que le liquide dans le passage de liquide (1") atteint une vitesse suffisante pour déborder vers l'extérieur comme un jet libre.

12. Système selon l'une quelconque des revendications 1 à 11, dans lequel la section transversale du passage de liquide (1") et/ou de la chambre de retenue (1') est dimensionnée en une façon que les forces de friction surmontent les forces d'inertie du liquide mouvementé dans la réduction de la pression négative ou positive, afin de supprimer la suite du ramassage ou de la décharge de liquide.

13. Système selon l'une quelconque des revendications 1 à 12, dans lequel le passage de liquide (1") est formé comme une tuyère.

14. Système selon l'une quelconque des revendications 1 à 13, dans lequel le réglage de dosage (7) est adapté à réguler une micro-pompe (2) raccordée au système de déplacement de gaz et/ou un dispositif de soupape dans une connexion à un réservoir de gaz dans la réduction de la pression négative ou positive, de sorte que une pression négative ou positive agissant dans un sens contraire aux forces d'inertie est appliquée.

15. Système selon l'une quelconque des revendications 1 à 14, dans lequel la section transversale de la chambre de retenue (1') ou en la course est tellement dimensionnée en une façon de et le réglage de dosage (7) est adapté à réguler la pression positive par actionnement de la micro-pompe (2) tellement que le liquide dans la chambre de retenue (1') ne dépasse pas une valeur de la vitesse qui résulte en un détachement de l'effluent dans la chambre de retenue (1') et en ce que du liquide résiduel reste dans la paroi de la chambre de retenue (1').

16. Système selon l'une quelconque des revendications 1 à 15, dans lequel le réglage de dosage (7) est adapté à effectuer une sortie de gaz du passage de liquide (1") par l'actionnement des dispositifs de soupape (4) et/ou par l'actionnement de la micro-pompe (2), et à identifier une plongée dans un liquide à l'aide d'un changement de la pression enregistrée par le capteur de pression (5).

17. Système selon la revendication 16, dans lequel le réglage de dosage (7) est adapté à initier automatiquement le ramassage de liquide dans le réservoir de liquide (1) en raison d'un processus de plongée identifié.

18. Système selon l'une quelconque des revendications 1 à 17, dans lequel le réservoir de liquide (1) a des propriétés de surface anti-humectantes par rapport au liquide à doser dans son intérieur et/ou son extérieur.

19. Système selon l'une quelconque des revendications 1 à 18, dans lequel le réservoir de liquide (1) est une pointe de pipette.

20. Système selon l'une quelconque des revendications 1 à 19, dans lequel le réservoir de liquide (1) est fait de verre et/ou de matière plastique.

21. Système selon l'une quelconque des revendications 1 à 20, dans lequel le réservoir de liquide (1) est raccordé de façon amovible avec le raccord (6).

22. Système selon l'une quelconque des revendications 1 à 21, dans lequel le réservoir de liquide (1) est un article à usage unique.

23. Système selon l'une quelconque des revendications 1 à 22, qui présente une micro-pompe (2) dont l'entrée est connectée avec le raccord (6) à travers d'un réservoir de gaz à pression négative (3) et les dispositifs de soupape (4), et qui présente une autre micro-pompe (2') qui est connectée avec le raccord (6) à travers d'un réservoir de gaz à pression positive (3') et les dispositifs de soupape (4).

24. Système selon l'une quelconque des revendications 1 à 23, qui présente une micro-pompe (2) dont l'entrée est connectée avec le raccord (6) à travers d'un réservoir de gaz à pression négative (3) et des dispositifs de soupape (4'), et dont la sortie est connectée avec le raccord (6) à travers d'un réservoir de gaz à pression positive (3') et des dispositifs de soupape (4").

25. Système selon l'une quelconque des revendications 1 à 24, qui présente une micro-pompe (1) capable de pomper en au moins deux directions, et/ou au moins une micro-pompe (1, 1') capable de pomper seulement en une direction unique.

26. Système selon l'une quelconque des revendications 1 à 25, dans lequel au moins une micro-pompe (2) est une micro-pompe à membrane.

27. Système selon la revendication 26, dans lequel la micro-pompe à membrane (2) est sans soupapes ou présente des soupapes passives ou actives.

28. Système selon la revendication 27, dans lequel les soupapes actives de la micro-pompe à membrane (2") sont des dispositifs de soupape (4, 11) dans le raccord (6) et/ou dans une aération (10).

29. Système selon l'une quelconque des revendications 26 à 28, dans lequel la micro-pompe à membrane (2") et/ou les soupapes actives (4, 11) a/ont au moins une membrane avec un actionneur piézoélectrique intégré.

30. Système selon l'une quelconque des revendications 1 à 29, dans lequel la micro-pompe (2) est pontée par un capteur de pression différentielle (13).

31. Système selon l'une quelconque des revendications 1 à 30, dans lequel la micro-pompe (2) est adaptée à refouler le gaz à travers d'un filtre (9).

32. Système selon l'une quelconque des revendications 1 à 31, dans lequel plusieurs micro-pompes (2) sont connectées en série l'une derrière l'autre et/ou plusieurs micro-pompes (2) sont connectées en parallèle côté à côté.

33. Système selon la revendication 10, dans lequel la connexion de ventilation (10) se branche du raccord (6) ou du réservoir de gaz (3).

34. Système selon la revendication 10, dans lequel le raccord (6) est un canal de connexion et/ou la connexion de ventilation (10) est un canal de ventilation.

35. Système selon l'une quelconque des revendications 1 à 34, dans lequel le raccord (6) a au maximum la même résistance à l'écoulement pour le gaz que une tuyère (1") du réservoir de liquide (1) pour le liquide.

36. Système selon l'une quelconque des revendications 1 à 35, dans lequel la micro-pompe (2) et/ou les dispositifs de soupape (4) et/ou les autres dispositifs de sopupape présentent des soupapes à clapet passives et/ou actives (11).

37. Système selon l'une quelconque des revendications 1 à 36, dans lequel le capteur de pression (12) est adapté à détecter la pression dans le raccord (6).

38. Système selon l'une quelconque des revendications 1 à 37, dans lequel la micro-pompe (2) et/ou les dispositifs de soupape (4) et/ou les autres dispositifs de soupape (11) et/ou le capteur de pression (12) et/ou le réservoir de gaz (3) et/ou le raccord (6) et/ou la connexion de ventilation (10) et/ou le réservoir de liquide (2) et/ou le réglage de dosage (7) sont arrangés sur un corps de microplaque de fluide (13).

39. Système selon la revendication 38, dans lequel le corps de microplaque de fluide (13) est connecté à un corps de plaque à connexion (15).

40. Système selon l'une quelconque des revendications 1 à 21, dans lequel plusieurs systèmes de déplacement de gaz sont disposés en parallèle et connectés à au moins un réservoir de liquide (2), et/ou dans lequel plusieurs réservoirs de liquide (1) sont disposés en parallèle et sont connectés à au moins un système de déplacement de gaz.

41. Système selon la revendication 40, dans lequel le réservoir de liquide présente un système de distribution (18) pour liquide avec un conduit d'alimentation (19) et plusieurs bras latéraux (20) sortants de cela.

42. Système selon la revendication 40 ou 41, qui présente des réservoirs de liquide (22, 22') avoisinants avec des ouvertures de sortie avoisinantes (22", 22"') et au moins un système de déplacement de gaz associé aux réservoirs de liquide (22, 22') avec au moins un réglage de dosage (7).

43. Système selon la revendication 42, dans lequel le réglage de dosage (7) est adapté à régler la décharge d'un fluide à partir d'un réservoir de fluide (22') et le ramassage d'un fluide dans l'autre réservoir de liquide (22) de façon simultanée et/ou la décharge simultanée d'un fluide à partir des deux réservoirs de liquide (22, 22').

44. Système selon l'une quelconque des revendications 1 à 43, réalisé comme appareil à main ou appareil stationnaire.

45. Système selon l'une quelconque des revendications 1 à 44, qui présente un rayon lumineux d'une DEL aligné en parallèle ou coaxialement au passage de liquide (1").

46. Système selon la revendication 45, qui présente un capteur de lumière (17') connecté au réservoir de liquide (1) à travers d'un chemin de lumière pour détecter un contact de liquide du réservoir de liquide (1).

47. Système selon l'une quelconque des revendications 1 à 46, qui présente un magasin avec des dispositifs d'alimentation et/ou éjection pour des réservoirs de liquide (1) échangeables.

48. Système microdoseur à coussin de gaz à plusieurs canaux, consistant de plusieurs systèmes parallèles selon l'une quelconque des revendications 1 à 47.

49. Système selon la revendication 48, dans lequel l'écart de passages de liquide avoisinants (1") correspond à l'écart d'accommodations avoisinantes d'une plaque de microtitration.
